# EUROPÄISCHE PATENTSCHRIFT

(11) **EP 2 761 282 B1**
(45) Veröffentlichungstag und Bekanntmachung des Hinweises auf die Patenterteilung: **26.06.2019**
(21) Anmeldenummer: 12790784.8
(22) Anmeldetag: 25.09.2012
(51) Int. Cl.: G01N 23/04, G01N 23/087

(54) **VERFAHREN UND VORRICHTUNG ZUM ERFASSEN DER STRUKTUR VON BEWEGTEN STÜCKGÜTERN, INSBESONDERE ZUR ERFASSUNG VON STÖRPARTIKELN IN FLÜSSIGEN ODER PASTÖSEN PRODUKTEN**
METHOD AND DEVICE FOR DETECTING THE STRUCTURE OF MOVING SINGLE ITEMS, IN PARTICULAR FOR DETECTING FOREIGN PARTICLES IN LIQUID OR PASTE-LIKE PRODUCTS
PROCÉDÉ ET DISPOSITIF PERMETTANT DE DÉTECTER LA STRUCTURE DE MARCHANDISES DE DÉTAIL QUI SONT DÉPLACÉES, NOTAMMENT DE DÉTECTER DES PARTICULES PERTURBATRICES DANS DES PRODUITS LIQUIDES OU PÂTEUX

(30) Priorität: 27.09.2011 DE 102011053971
(43) Veröffentlichungstag der Anmeldung: 06.08.2014
(73) Patentinhaber: WIPOTEC GmbH, 67657 Kaiserslautern (DE)
(72) Erfinder: Lüghausen, Kai, Mark, 55232 Alzey (DE); Doll, Theodor, 44894 Bochum (DE)
(74) Vertreter: Eder, Christian
(86) Internationale Anmeldenummer: PCT/DE2012/100300
(87) Internationale Veröffentlichungsnummer: WO 2013/044910

(56) Entgegenhaltungen:
- WO-A1-01/27601
- WO-A1-2009/073284
- WO-A2-2010/100274
- CN-A- 101 455 573
- US-A1- 2008 247 504
- US-A1- 2010 278 296

## Beschreibung

Die Erfindung betrifft ein Verfahren zum Erfassen der Struktur von bewegten Stückgütern, insbesondere zur Erfassung von Störpartikeln in flüssigen oder pastösen Produkten sowie eine entsprechende Vorrichtung.

Es ist bekannt, zur nicht-invasiven bzw. zerstörungsfreien Untersuchung von Objekten Röntgenstrahlung einzusetzen, mit welcher das Objekt durchstrahlt und ein Röntgenbild mittels eines geeigneten Detektors erfasst wird. Zur Hervorhebung bestimmter Charakteristika oder Strukturen eines Objekts wird das Dual-Energy-Verfahren eingesetzt, bei dem das Objekt mit Röntgenstrahlung mit zwei verschiedenen Energiespektren (bzw. Frequenz- oder Wellenlängenspektren) durchstrahlt und für die Durchstrahlung mit jedem der beiden Spektren jeweils ein Bild erfasst wird. Hierbei wird der Effekt genutzt, dass bestimmte Materialien oder Materialstrukturen bei einer Durchstrahlung mit unterschiedlichen Wellenlängen/Frequenzen ein unterschiedliches Absorptions- bzw. Dämpfungsverhalten aufweisen. Die beiden Bilder können dann zur Verbesserung der Erfassbarkeit bestimmter Strukturen rechnerisch kombiniert werden. Beispielsweise kann ein Differenzbild erzeugt werden, indem die vorzugsweise in digitaler Form vorliegenden Bildinformationen pixelweise durch eine gewichtete Subtraktion verrechnet werden. Das Ergebnisbild kann dann entweder visuell oder mittels Mustererkennungsverfahren daraufhin geprüft werden, ob bestimmte Kriterien erfüllt oder nicht erfüllt sind. Beispielsweise können hierdurch Fremdkörper in flüssigen oder pastösen Produkten zuverlässiger erkannt werden, als dies bei der Durchstrahlung mit einer einzigen schmalbandigen oder mit einer breitbandigen Röntgenstrahlung möglich wäre (z.B. DE 690 11 194 T2).

Dieses Dual-Energy-Verfahren, welches bei Verwendung von mehr als zwei, hinsichtlich des Wellenlängen- oder Frequenz- bzw. Energiespektrums unterschiedlichen Röntgenstrahlungen auch als Multi-Energy-Verfahren ausgebildet sein kann, bedingt jedoch einen höheren Aufwand als die Durchstrahlung mittels einer Röntgenstrahlung, die nur ein einziges, konstantes Spektrum aufweist.

Das Dual-Energy-Verfahren bzw. Multi-Energy-Verfahren ist in verschiedenen Varianten bekannt. Beispielsweise können zwei oder mehrere Strahlungsquellen mit unterschiedlichen spektralen Charakteristiken verwenden werden. Diese können jeweils mit einem Detektor oder einer entsprechenden Anzahl von Detektoren kombiniert werden. Beispielsweise zeigt die US 6,370,223 B1 eine Vorrichtung mit zwei Strahlungsquellen und zwei Detektoren, wobei jedes Paar von Strahlungsquelle und zugeordnetem Detektor an unterschiedlichen Positionen eines Förderbands zum Transportieren von zu untersuchenden Objekten angeordnet ist. Dies bedingt jedoch auch einen zweifachen Hardware-Aufwand zur Erzeugung der beiden Bilder für die Durchstrahlung mit unterschiedlichen Energiespektren.

Die US 2008/0247504 A1 offenbart ein Computertomographie-System zur Untersuchung von Personen, bei dem eine rotierende Röntgenquelle mit einem ebenfalls rotierenden Detektor verwendet wird. Bei diesem System ist die Röntgenquelle so ausgestaltet, dass die Röntgenstrahlung von zwei verschiedenen, nahe beieinander liegenden Punkten bzw. Linien ausgeht. In Verbindung mit der Rotation der Röntgenstrahlungsquelle und des Detektors ergibt sich dabei eine Verbesserung der Auflösung. Dies wird dadurch erreicht, dass der Röntgenstrahl, der von einem ersten Punkt ausgeht, Teilstrahlen erzeugt, die durch einen Pfad durch die Person hindurch treten, der identisch ist mit dem Pfad, auf welchem diejenigen entsprechenden Teilstrahlen durch die Person hindurch treten, welche von dem zweiten Punkt der Röntgenstrahlungsquelle ausgehen. Die einander entsprechenden Teilstrahlen werden dabei jeweils von in Rotationsrichtung benachbarten Pixeln des Sensors detektiert. Somit wird für denselben Pfad durch die Person ein erstes und ein zweites Teilbild erzeugt. Für jedes der beiden Teilbilder kann dabei eine unterschiedliche Energie der Röntgenstrahlung bzw. ein unterschiedliches Spektrum der Röntgenstrahlung verwendet werden. Dies kann dadurch geschehen, dass die Röntgenstrahlung, die von jedem der beiden Punkte ausgeht, jeweils ein unterschiedliches Spektrum aufweist. Gleichzeitig oder zusätzlich können die jeweils benachbarten Pixel des die Röntgenstrahlung erfassenden Sensors mittels eines Grid-Filters unterschiedliche Spektren der auftretenden Strahlung aus dem Gesamtspektrum herausfiltern.

In der US 2010/0278296 A1 ist ein Verfahren und eine Vorrichtung zur Realisierung eines Computertomographie-Systems beschrieben, bei dem ebenfalls das Dual-Energy-Verfahren verwendet wird. Auch hier findet ein Detektor Verwendung, welcher eine schachbrettartige Struktur aufweist. Die Daten für die unterschiedlichen Teilbilder, welche für die unterschiedlichen Spektren der Röntgenstrahlung erzeugt werden, können durch eine Interpolation der Daten, die mit der schachbrettartigen Filterstruktur erfasst werden, auch an solchen Pixelpositionen ermittelt werden, an welchen die Daten für das jeweils andere Teilbild erfasst werden. Hierdurch kann die Darstellung der Teilbilder geglättet werden.

Der Offenbarungsgehalt der WO 2009/073284 A1 entspricht in weiten Teilen der US 2010/0278296 A1. Zusätzlich zu einer schachbrettartigen Struktur sind hier noch streifenartige Filterstrukturen für Ortsfilter dargestellt, ohne dass entsprechende Vor- oder Nachteile dieser Strukturen erwähnt sind.

Die WO 01/27601 A1 beschreibt eine Vorrichtung und ein Verfahren zur Röntgenuntersuchung von Gepäckstücken, wobei das zu untersuchende Gepäckstück mittels jeweils einer separaten Strahlungsquelle in horizontaler Richtung und vertikaler Richtung von der Röntgenstrahlung durchstrahlt wird. Für das Detektieren der das Gepäckstück durchstrahlenden Röntgenstrahlung wird jeweils ein Detektor verwendet, welcher als Sensor eine einzige Pixelzeile aufweist. Zur Realisierung des Dual-Energy-Verfahrens weisen die Detektoren bzw. die Sensoren jeweils ein Grid-Filter auf, welches beispielsweise so ausgestaltet sein kann, dass die Pixel der Sensorzeile alternierend mit einer unterschiedlichen Filtercharakteristik für die zu detektierende Röntgenstrahlung beaufschlagt werden.

Es ist weiterhin bekannt, ein oder mehrere Filter (insbesondere Kantenfilter) einzusetzen, um aus einer breitbandigen Quelle eine Strahlung mit nur einem Teil des ursprünglichen Spektrums zu erzeugen und jeweils denselben Detektor zur Bilderfassung zu verwenden (z.B. US 3,665,184).

Es ist auch möglich, ein und dieselbe Röntgenstrahlungsquelle zeitlich nacheinander unterschiedlich anzusteuern, so dass sich nicht nur die Strahlungsleistung (über das gesamte Spektrum konstant) verändert, sondern eine Änderung der spektralen Charakteristik erreicht wird (JP 2010172590A).

Aus der WO 2010/100274 A2 ist schließlich ein System zur Abtastung eines bewegten Objekts bekannt, wobei das Objekt mit einer hochenergetischen Strahlung durchstrahlt wird. Dabei wird als Detektor insbesondere ein Flächensensor vorgeschlagen, welcher als Photonenzähler arbeitet. Der Flächensensor kann nach dem TDI- (Time-Delay Integration) Verfahren arbeiten. Die Auswertung von unterschiedlichen spektralen Bereichen der hochenergetischen Strahlung ist hier nicht vorgesehen.

Diese vorstehend beschriebenen Verfahren sind jedoch für schnell bewegte Objekte bei Verwendung nur eines einzigen Detektors kaum verwendbar, da es mit vertretbarem Aufwand nicht möglich ist, praktisch zeitgleich Bilder für identische Teile des Objekts oder gar das gesamte Objekt zu erzeugen. Hierzu müssten extrem schnelle Detektoreinrichtungen verwendet werden, um möglichst kurz hintereinander die wenigstens zwei Bilder für die verschiedenen Strahlungs-Energiespektren zu erfassen. Zudem müsste auch die Umschaltung von der einen Strahlungsquelle auf die andere Strahlungsquelle entsprechend schnell erfolgen. Die Lösung, einen Flächendetektor zu verwenden und die in kurzem, zeitlichen Abstand aufgenommenen Bilder, die dann auf dem Detektor einen örtlichen Versatz aufweisen, durch rechnerische Maßnahmen zur Deckung zu bringen, würde ebenfalls einen entsprechenden Aufwand bedingen. Derartige Flächendetektoren, die meist als digitale Detektoren mit matrixförmig angeordneten Pixeln ausgebildet sind, sind relativ teuer und führen bei einer hohen Auflösung mit kurzer Belichtungszeit auch dazu, dass pro Pixel nur eine geringe Strahlungsenergie erfasst wird. Somit können Rauschprobleme entstehen.

Aus der CN 101455573 A ist ein Dual-Energy-Verfahren zur Untersuchung des menschlichen Körpers bekannt, bei dem unmittelbar vor einem flächigen Sensor ein flächiges Streifenfilter als Ortsfilter verwendet wird. Das Ortsfilter weist Streifen zweier unterschiedlicher Typen auf, die alternierend angeordnet sind. Die unterschiedlichen Streifentypen weisen in Durchstrahlungsrichtung Materialien mit einer unterschiedlichen Dichte auf. Die unterschiedlichen Filterbereiche wirken entweder so, dass in einem der streifenförmigen Bereiche die Strahlung nicht oder nur schwach gedämpft wird und in dem anderen der streifenförmigen Bereiche eine (stärkere) Filterwirkung (Hochpass-, Tiefpass- oder Bandpassfilterwirkung) besteht, oder dass in beiden Bereichen eine jeweils andere Kantenfilterwirkung existiert. Damit lassen sich gleichzeitig, mit einer einzigen Belichtung, zwei Bilder des selben Objekts erzeugen, die jeweils unterschiedliche Informationen beinhalten. Diese Bilder können anschließend rechnerisch kombiniert werden. Dabei kann bei einer Anordnung der Streifen die volle Bildinformation (in der geforderten Auflösung) auch in der gesamten Querrichtung berechnet werden (Nyquist-Shannon-Abtasttheorem), wenn das hierdurch erzeugte örtliche Abtastintervall quer zur Längsrichtung der Streifen so klein ist, dass eine zu erfassende Struktur mit einer vorgegebenen minimalen Größe (in Querrichtung) noch zweimal abgetastet wird. Dies kann beispielsweise durch Interpolationsverfahren oder mit der Methode der Fast-Fourier-Transformation erfolgen. Die berechneten Bildinformationen können dann durch eine vorzeichenbehaftete Addition kombiniert werden, wodurch selbstverständlich auch eine gewichtete Subtraktion der beiden Bilder realisierbar ist. Dadurch kann der Vorteil des Dual-Energy-Verfahrens mit dem Vorteil der Verwendung eines einzigen Detektors und einer einzigen (breitbandigen oder zumindest zwei schmalbandige Energiebereiche aufweisenden) Strahlungsquelle kombiniert werden.

Allerdings sind auch das in der CN 101455573 A beschriebene Verfahren bzw. die entsprechende Vorrichtung kaum geeignet, um in einem industriellen Prozesses verwendet zu werden, beispielsweise bei Qualitätskontrollen von Produkten, bei denen häufig die innere und/oder äußere Struktur von schnell bewegten Produkten erfasst werden muss. Insbesondere die Verwendung eines ausreichend großen Flächendetektor mit ausreichender Auflösung wäre im industriellen Einsatz viel zu teuer.

Der Erfindung liegt daher die Aufgabe zugrunde, ein Verfahren zum Erfassen der Struktur von bewegten Stückgütern, insbesondere zur Erfassung von Störpartikeln in flüssigen oder pastösen Produkten zu schaffen, welches für einen industriellen Prozess einfach und kostengünstig realisierbar ist und eine ausreichend genaue Erfassung von schnell bewegten Stückgütern ermöglicht. Des Weiteren liegt der Erfindung die Aufgabe zugrunde, eine entsprechende Vorrichtung zu schaffen.

Die Erfindung löst diese Aufgabe mit den Merkmalen der Patentansprüche 1 bzw. 7. Die Erfindung geht von der Erkenntnis aus, dass die Verwendung eines Streifenfilters gemäß dem in der CN 101455573 A für die Anwendung im medizinischen Bereich beschriebenen Verfahrens in vorteilhafter Weise auch mit einem Zeilendetektor, der ein oder mehrere (wenige) Zeilen umfasst, kombiniert werden kann. Hierdurch kann eine sehr kostengünstige Hardware zur Realisierung des Verfahrens geschaffen werden. Es wird lediglich eine breitbandige oder wenigstens zwei schmalbandige Bereiche im Energiespektrum aufweisende Röntgenstrahlungsquelle und nur eine einzige Detektoreinrichtung benötigt, welche die das schnell bewegte Stückgut durchstrahlende Röntgenstrahlung in unterschiedlichen spektralen Bereichen (des Energiespektrums) in einer oder mehreren, relativ wenigen (z.B. 128) Zeilen erfasst. Die Detektoreinrichtung weist dabei ein Streifen-Ortsfilter auf, mit dem zwei streifenförmige Bilder des zu erfassenden Stückguts für jeweils unterschiedliche Bereiche des Energiespektrums der empfangenen Röntgenstrahlung auf der einen oder den wenigen Detektorzeilen bzw. Erfassungslinien erzeugt werden. Damit lassen sich, wie vorstehend in Verbindung mit einem Flächendetektor beschrieben, gleichzeitig zwei zeilenförmige Bilder des zu erfassenden Stückgutes gewinnen. Die Belichtungszeit kann dabei durch die Integrationszeit für die Strahlungsleistung am Ort der Erfassungsline bestimmt werden, d.h. durch die Zeit zwischen dem Löschen oder Auslesen der Bildinformation der betreffenden Zeile und dem darauf folgenden Zeitpunkt des Auslesens der neu gewonnenen Bildinformation. Die "Belichtungszeit" bzw. die Zeit zwischen dem Auslesen der Information von zwei aufeinanderfolgenden "Zeileninformationen" bestimmt auch die maximale Abtastrate bzw. das zeitliche oder örtliche Abtastintervall für die "scheibchenweise" Abtastung des Stückgutes.

Diese Information einer Zeile wird aufgeteilt in wenigstens zwei Teilbilder (Dual-Energy-Verfahren) oder in mehrere Teilbilder (Multi-Energy-Verfahren), wobei jedem Teilbild die Informationen von Erfassungspositionen innerhalb der betreffenden Zeile zugeordnet werden, an denen jeweils die empfangene Strahlung eines dem Teilbild zugeordneten spektralen Bereichs des Energiespektrums erfasst wird. Diese Erfassungspositionen sind durch die zwei (Dual-Energy-Verfahren) oder mehreren (Multi-Energy-Verfahren) Typen von Streifen des Streifen-Ortsfilters definiert. Dabei ist nicht zwingend erforderlich, dass pro Erfassungsposition nur ein Detektorpixel vorhanden ist. Vielmehr können einer einzigen Erfassungsposition entlang der Erfassungslinie auch mehrere Pixel des Detektors der Röntgenstrahlungsdetektoreinrichtung zugeordnet sein. Der Verlauf der linearen, vorzugsweise gleich breiten und äquidistanten Streifen des Ortsfilters ist erfindungsgemäß parallel zur Bewegungsrichtung des Stückguts ausgerichtet, wohingegen die eine oder mehreren Erfassungslinien quer zur Bewegungsrichtung (und im Wesentlichen senkrecht zur Bestrahlungsrichtung vorgesehen sind. Wird ein Förderband zum Transport des Stückguts verwendet, so kann die Bestrahlungsrichtung vorzugsweise senkrecht zur Ebene des Bandtrums gewählt werden, auf welchem das zu durchstrahlende Stückgut aufliegt.

Auf diese Weise kann das Stückgut in Richtung seiner Bewegung zeilenweise abgetastet werden, wobei pro Zeile und Abtastort bzw. Abtastzeitpunkt jeweils zwei unterschiedliche Bildinformationen gewonnen werden. Die Teilbilder bzw. die (vorzugsweise in digitalisierter Form vorliegenden) Teilbilddaten für alle Erfassungspositionen, an welchen dasselbe Energiespektrum erfassbar ist, werden rechnerisch zu einem Teil-Ergebnisbild verknüpft. Dieses kann dann hinsichtlich des Auftretens von vorgegebenen Charakteristika, beispielsweise von zu erfassenden Störstrukturen, geprüft werden.

Es können jedoch auch zunächst alle Teil-Ergebnisbilder (bzw. die entsprechenden Bilddaten) für alle Abtastpositionen zu einem Ergebnisbild kombiniert werden, das dann vorzugsweise als digitales Bild vorliegt und welches wiederum hinsichtlich des Auftretens von vorgegebenen Charakteristika geprüft werden kann.

Die Prüfung der Teil-Ergebnisbilder oder des hieraus ermittelten Ergebnisbildes kann durch eine automatisierte Auswertung, beispielsweise mittels eines Bildauswerteverfahrens, erfolgen oder durch eine visuelle Darstellung der Bilddaten des Teil-Ergebnisbildes, welche von einer Bedienperson visuell geprüft wird.

Generell sei bemerkt, dass erfindungsgemäß anstelle von Röntgenstrahlung jede Art von Hochenergiestrahlung verwendet werden kann.

Nach der bevorzugten Ausführungsform der Erfindung sind die Erfassungspositionen eines Teilbildes entlang der betreffenden Linie äquidistant und hinsichtlich des Abstandes so gewählt, dass sich eine zu erfassende Struktur des Stückguts mit einer vorgegebenen minimalen Ausdehnung entlang der wenigstens einen Linie über wenigstens zwei Erfassungspositionen dieses Teilbildes erstreckt. Diese Bedingung resultiert aus dem Abtasttheorem (Nyquist-Shannon-Abtasttheorem), welches besagt, dass das Originalsignal (hier die Strahlungsverteilung vor dem Ortsfilter im betreffenden spektralen Bereich) aus dem abzutasteten Signal (dem Teilbild für den betreffenden spektralen Bereich nach dem Ortsfilter) nur dann ohne Verluste wieder korrekt (ohne Verlust von Information) hergestellt werden kann, wenn im abzutastenden Signal keine Frequenzanteile vorkommen, die kleiner sind als die halbe Abtastfrequenz (hier: örtliche Abtastfrequenz entlang der Erfassungslinie).

Vorzugsweise ist dieses Abtasttheorem nach dem erfindungsgemäßen Verfahren auch für die Abtastung des Stückgutes in seiner Bewegungsrichtung erfüllt, d.h. die Abtastpositionen in der Bewegungsrichtung des Stückguts sind dann vorzugsweise äquidistant und hinsichtlich des Abstandes so gewählt, dass sich eine zu erfassende Struktur des Stückguts mit einer vorgegebenen minimalen Ausdehnung in der Bewegungsrichtung über wenigstens zwei Abtastpositionen erstreckt.

Ist diese Bedingung jeweils für die Abtastung in einer Zeile und die Abtastung in der Bewegungsrichtung des Stückgutes erfüllt, so kann jeweils ein gesamtes Ergebnisbild (an beliebigen Positionen in einer Ebene senkrecht zur Durchstrahlungsrichtung) ermittelt werden, welches trotz der Verwendung des Streifen-Ortsfilters keine Verluste (bezogen auf die vorgegebene Ortsauflösung) aufweist.

Nach einer Ausführungsform des Verfahrens nach der Erfindung werden aus den detektierten Teilbilddaten eines jeden der wenigstens zwei Teilbilder jeweils mittels einer vorgegebenen Transformationsvorschrift die Werte des betreffenden Teilbildes an ausgewählten oder an allen Erfassungspositionen wenigstens eines weiteren der wenigstens zwei Teilbilder berechnet. Aus den detektierten und berechneten Teilbilddaten von zwei oder mehreren der Teilbilder kann so ein Teil-Ergebnisbild berechnet werden, welches eine höhere Auflösung aufweist als die einzelnen Teilbilder. Hierzu können zwei oder mehrere der "interpolierten" Teilbilder, welche jeweils detektierte und berechnete Teilbilddaten umfassen, durch eine gewichtete, das Vorzeichen der Gewichtungsfaktoren berücksichtigende Addition der Teilbilddaten (für jeweils identische Positionen) zu dem Teil-Ergebnisbild kombiniert werden.

Schließlich kann das Ergebnisbild aus den berechneten Bilddaten für die Teil-Ergebnisbilder zusammengesetzt oder berechnet werden. Das Berechnen kann auch so vorgenommen werden, dass aus den Teil-Ergebnisbildern die Bilddaten auch an Positionen in der Bewegungsrichtung berechnet werden, die zwischen den Abtastpositionen liegen. Wie vorstehend ausgeführt, lassen sich hier korrekte (für die geforderte Ortsauflösung verlustlose) Ergebnisse erreichen, wenn auch bei der Abtastung in der Bewegungsrichtung das Abtasttheorem erfüllt ist.

Selbstverständlich kann auch erst aus den Teilbildern für die Abtastung entlang einer Zeile die Information in Positionen zwischen zwei Zeilen (zwischen zwei Abtastpositionen) berechnet werden und erst anschließend eine Verrechnung (gewichtete, vorzeichenbehaftete Addition der berechneten Teilbilddaten) zu einem gesamten Ergebnisbild erfolgen. Erfindungsgemäß kann dann jedes Teil-Ergebnisbild oder das vollständige Ergebnisbild oder vorgegebene Ausschnitte des Ergebnisbildes hinsichtlich des Vorliegens von zu detektierenden Störcharakteristika geprüft werden, vorzugsweise unter Verwendung eines Mustererken nungsverfahrens.

Gemäß der Erfindung sind wenigstens zwei Erfassungslinien vorgesehen, die einen vorgegebenen Abstand in der Bewegungsrichtung aufweisen, dass die einem Teilbild zugeordneten Erfassungspositionen der wenigstens zwei Erfassungslinien in gleicher Weise entlang jeder Linie angeordnet sind. Die Position und Ausrichtung jeder weiteren Erfassungslinie ist durch eine Verschiebung einer ersten Erfassungslinie in der Bewegungsrichtung erzeugbar.

Die Röntgenstrahlung wird an den wenigstens zwei Erfassungslinien während jeweils eines Erfassungsintervalls derart zeitversetzt detektiert, dass während jedes Erfassungsintervalls Strahlung detektiert wird, welche das Stückgut im Wesentlichen auf demselben Pfad durchdrungen hat. Dieses Verfahren ist als sogenanntes TDI-(Time-Delay Integration) Verfahren bekannt. Werden mehrere parallele Erfassungslinien verwendet, die vorzugsweise nur einen geringen Abstand aufweisen (was aber für die Durchführung des Verfahrens nicht zwingend erforderlich ist), so ergibt sich eine quasi "mitlaufende" Erfassungslinie.

Derartige digitale TDI-Bilddetektoren sind bekannt. Dabei wird die während einer "Belichtungsphase" oder Abtastphase auf den einzelnen Sensorpixeln einer Zeile (Erfassungslinie) erzeugte Ladung nach Abschluss der Abtastphase in die betreffenden Sensorpixel der (in Bewegungsrichtung) folgenden Zeile (Erfassungslinie) weitergeschoben. Während der sich anschließenden "Belichtungsphase" bzw. Abtastphase wird in diesen Pixeln eine der in dieser Phase auftreffenden weiteren Strahlungsenergie entsprechende Ladung hinzugefügt, so dass eine Integration der Ladungsmenge erfolgt, welche der Summe der in allen Abtastphasen bzw. Abtastpositionen erfassten Strahlungsenergie entspricht. Wird die Geschwindigkeit des "virtuellen Mitbewegens" der Erfassungsline mit der Bewegungsgeschwindigkeit des Stückgutes synchronisiert, so wird in jeder Position der mitbewegten Erfassungslinie nur solche Strahlung detektiert, welche das Stückgut jeweils auf demselben Pfad durchstrahlt hat. Dies entspricht der Erfassung der Information einer "mehrfachbelichteten" "Scheibe" des Stückguts während seiner Bewegung.

Die Röntgenstrahlungsquellen für eine Vorrichtung nach der Erfindung kann eine breitbandige Quelle oder eine Quelle verwendet werden, welche zwei oder mehrere Bänder im Energiespektrum aufweist. Sie kann auch im Dauerbetrieb betrieben werden, eine gepulste Ansteuerung ist nicht erforderlich.

Die Erzeugung einer spektralen Erfassungscharakteristik an den Erfassungspositionen einer Erfassungslinie, die einem Teilbild zugeordnet sind, welches für einen vorgegeben spektralen Ausschnitt des Energiespektrums oder das gesamte Spektrum der empfangenen Strahlung erfasst werden soll, kann, wie vorstehend erwähnt, mittels eines Ortsfilters erzeugt werden. Dieses Ortsfilter kann ein separates Bauelement mit einer streifenartigen Struktur sein, wobei die verschiedenen Typen von vorzugsweise alternierend angeordneten Streifen eine unterschiedliche Kantenfilterwirkung besitzen (ein Typ von Streifen kann die Strahlung auch im gesamten Energiespektrum gleichmäßig gedämpft transmittieren lassen). Diese Filterstruktur kann auch direkt mit dem Sensor integriert ausgebildet sein, beispielsweise als auf einem zeilenförmigen oder matrixförmigen Sensorchip aufgebrachte Schicht mit Streifen von unterschiedlicher Transmissionscharakteristik. Das Aufbringen der Schicht kann beispielsweise durch Verkleben eines folienartigen Filters erfolgen.

Nach einer Ausführungsform der Erfindung kann ein separat hergestelltes Ortsfilter auch in den Gurt eines Förderband integriert oder der Gurt insgesamt als Ortsfilter ausgebildet sein.

Es ist auch möglich, die Röntgenstrahlung mittels eines sogenannten Szintillators, der ebenfalls als separates Bauteil oder integriert mit dem Ortsfilter oder integriert mit einem Sensorchip ausgebildet sein kann, in eine elektromagnetische Strahlung im optischen (sichtbaren oder angrenzenden IR oder UV) Bereich umzuwandeln und mittels preiswerter optischer Detektoren zur erfassen.

Damit kann ein Streifen-Ortsfilter auch dadurch realisiert werden, dass ein Szintillator mit verschiedenen Typen von Streifen hergestellt wird, die jeweils unterschiedliche Szintillationseigenschaften aufweisen, beispielsweise nur für bestimmte Ausschnitte des Energiespektrums der auftreffenden Strahlung eine elektromagnetische Strahlung im optischen Bereich erzeugt. Die unterschiedlichen Typen von Streifen können auch auf oder innerhalb von verschiedenen Trägern (beispielsweise Folien) erzeugt werden, die dann vorzugsweise miteinander verbunden, beispielsweise verklebt werden. Die Streifen unterschiedlichen Typs können somit auch in verschiedenen Ebenen (in Strahlungsrichtung gesehen) angeordnet sein.

Nach einer anderen Alternative kann das Erzeugen der Streifenbilder auch dadurch erfolgen, dass ein Detektor verwendet wird, welcher an den unterschiedlichen Erfassungspositionen unterschiedliche Erfassungscharakteristiken aufweist, beispielsweise nur Strahlung detektiert, die in einem vorgebebenen Abschnitt des Energiespektrums liegt. Mit anderen Worten, der Detektor weist an den Erfassungspositionen, die den verschiedenen Streifenbildern zugeordnet sind, jeweils unterschiedliche spektrale Empfindlichkeiten auf.

Weitere Ausführungsformen der Erfindung ergeben sich aus den Unteransprüchen.

Die Erfindung wird nachstehend anhand in der Zeichnung dargestellter Ausführungsbeispiele näher erläutert. In der Zeichnung zeigen:
- Fig. 1: eine perspektivische, schematische Darstellung der Komponenten einer Vorrichtung zum Erfassen der Struktur von bewegten Stückgütern nach der Erfindung;
- Fig. 2: eine perspektivische, schematische Darstellung einer ersten zeilenförmigen Ausführungsform der Röntgenstrahlungsdetektoreinrichtung in Fig. 1 mit einem Streifen-Ortsfilter;
- Fig. 3: eine weitere perspektivische, schematische Darstellung einer zweiten, zeilenförmigen Ausführungsform der Röntgenstrahlungsdetektoreinrichtung in Fig. 1 mit einem Streifen-Ortsfilter und einem Szintillator;
- Fig. 4: eine perspektivische, schematische Darstellung einer matrixförmigen Ausführungsform für eine Röntgenstrahlungsdetektoreinrichtung in Fig. 1 mit einem StreifenOrtsfilter und einem Szintillator;
- Fig. 5: eine schematische Draufsicht auf eine weitere matrixförmige Ausführungsform für eine Röntgenstrahlungsdetektoreinrichtung in Fig. 1; und
- Fig. 6: eine schematische Draufsicht auf eine weitere, zeilenförmige Ausführungsform für eine Röntgenstrahlungsdetektoreinrichtung in Fig. 1 mit drei Typen von Erfassungspositionen.

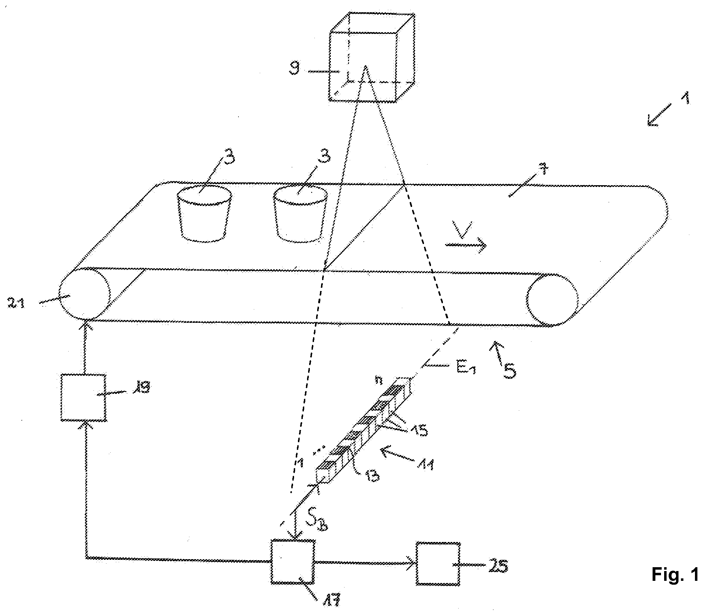

Fig. 1 zeigt den prinzipiellen Aufbau einer Vorrichtung 1 zum Erfassen der Struktur von bewegten Stückgütern 3, bei denen es sich beispielsweise um flüssige oder pastöse Produkte, wie beispielsweise Joghurt, handeln kann. Die Vorrichtung 1 umfasst eine Transporteinrichtung 5, die im dargestellten Ausführungsbeispiel als Bandförderer ausgebildet ist. Der Bandförderer 5 transportiert auf dem oberen Trum eines Förderbands 7 des Bandförderers 5 befindliche Stückgüter 3 mit einer vorgegebenen, vorzugsweise konstanten Geschwindigkeit v. Aus Gründen der Übersichtlichkeit sind in Fig. 1 die Komponenten der Vorrichtung 1 nur schematisch dargestellt, soweit dies für das Verständnis der Erfindung erforderlich ist.

Oberhalb des Bandförderers 5 ist eine Röntgenstrahlungsquelle 9 angeordnet, welche so ausgebildet ist, dass sich die von ihr erzeugte Röntgenstrahlung im Wesentlichen über die gesamte Breite des Förderbands 7 erstreckt. In Richtung der Bewegung des Förderbands 7 deckt der von der Röntgenstrahlungsquelle 9 erzeugte Röntgenstrahl zumindest eine solche Länge ab, die der Ausdehnung des empfindlichen Bereichs einer Röntgenstrahlungsdetektoreinrichtung 11 in dieser Richtung entspricht. Die Röntgenstrahlungsquelle 9 erzeugt eine Röntgenstrahlung mit einem breitbandigen Energiespektrum. Hierdurch ist es möglich, Röntgenbilder für unterschiedliche spektrale Anteile der Strahlungsenergie zu detektieren und damit verschieden Materialien oder Strukturen des Stückgutes 3 besser oder weniger gut hervorzuheben, wenn diese Energiequanten mit bestimmtem Energieinhalt besser oder schlechter absorbieren. Durch die Verrechnung der unterschiedlichen Bilder kann dann entsprechend der bekannten Dual-Energy oder Multi-Energy Technik eine bessere Erkennbarkeit bestimmter Strukturen oder Materialien bzw. Materialbereiche erreicht werden. Anstelle eines breitbandigen Spektrums ist es selbstverständlich auch möglich, dass die Röntgenstrahlungsquelle 9 wenigstens zwei solche spektrale Bänder (Dual-Energy-Verfahren) oder mehrere solche spektrale Bänder (Multi-Energy-Verfahren) aufweist, die Energiebereiche abdecken, mit welchen die gewünschten Informationen im zu durchstrahlenden Stückgut gewonnen werden können.

Bei der in Fig. 1 dargestellten Röntgenstrahlungsdetektoreinrichtung 11 handelt es sich um einen Zeilendetektor, dessen Sensorzeile 13 sich geradlinig und senkrecht zur Bewegungsrichtung v des oberen Trums des Förderbands 7 sowie im Wesentlichen parallel zur Oberfläche des Förderbands 7 erstreckt. Die Sensorzeile 13 weist eine Anzahl n, beispielsweise 1024 von Sensoren 15 auf, die entweder die Röntgenstrahlung unmittelbar in ein elektrisches Signal umwandeln oder eine elektromagnetische Strahlung (z.B. sichtbares Licht), welche von der Röntgenstrahlung mittels eines vor den Sensoren 15 angeordneten Konverters in Form eines sogenannten Szintillators erzeugt wird. Diese vom Szintillator (sh. unten) erzeuge elektromagnetische Strahlung kann beispielsweise im optischen Bereich liegen, wobei im vorliegenden Zusammenhang auch die im Infrarotbereich oder Ultraviolettbereich zugeordnete optische Strahlung vom Begriff "optische Strahlung" umfasst sein soll.

Das elektrische Bildausgangssignal S_{B} der Röntgenstrahlungsdetektoreinrichtung 11 ist einer Bilddatenverarbeitungseinheit 17 zugeführt. Die Bilddatenverarbeitungseinheit 17 kann die Röntgenstrahlungsdetektoreinrichtung 11 auch in geeigneter Weise ansteuern und beispielsweise die Frequenz oder Häufigkeit bestimmen, mit welcher die Bilddaten einer Zeile der gesamten Sensorzeile 13 ausgelesen werden. Des Weiteren kann die Bilddatenverarbeitungseinheit 17 die auf den einzelnen Sensoren 15 der Sensorzeile 13 vorhandene Information, die beispielsweise als elektrische Ladung in jedem der einzelnen Sensoren 15 gespeichert ist, löschen und damit den Beginn eines neuen Belichtungsintervalls definieren. Dies ist insbesondere dann vorteilhaft, wenn die Röntgenstrahlungsquelle 9 eine zeitlich konstante Röntgenstrahlung mit einer vorgegebenen Strahlungsleistung pro Flächeneinheit erzeugt.

In diesem Fall kann auf einfache Weise die in den Sensoren 15 der Sensorzeile 13 gespeicherte Information (elektrische Ladung) ausgelesen und als vorzugsweise digitalisierter Wert pro Sensor 15 der Bilddatenverarbeitungseinheit 17 zugeführt werden. Wird der Informationsgehalt der Sensoren 13 beispielsweise 10.000 mal pro Sekunde ausgelesen, so ergibt sich ein maximales Belichtungsintervall von 100 µs. In diesem Intervall kann in jedem der Sensoren 15 die auf der aktiven Empfangsfläche jedes Sensors 15 (die beispielsweise quadratisch ausgebildet sein kann) eine der in diesem zeitlichen Intervall empfangenen Strahlungsenergie entsprechende elektrische Ladung erzeugt werden. Für die in einem Sensor 15 erzeugte Ladungsmenge wird, wie vorstehend ausgeführt, ein entsprechender digitalisierter Wert erzeugt, der dann von der Bilddatenverarbeitungseinheit 17 weiter verarbeitet werden kann. Die hierzu nötige Analog-/Digitalwandlereinheit (nicht dargestellt) ist vorzugsweise in der Röntgenstrahlungsdetektoreinrichtung 11 vorgesehen.

Die Abtastrate, die mittels der Röntgenstrahlungsdetektoreinrichtung 11 erreichbar ist, bestimmt auch die maximal zulässige Geschwindigkeit v für die Bewegung der Stückgüter 3 auf dem Förderband 7. Wird das Förderband 7 beispielsweise mit einer Geschwindigkeit von 3 m/s angetrieben und beträgt die Abtastrate 10.000 1/s, so ergibt sich ein örtliches Abtastintervall von 300µm. Die maximale Ortsauflösung in der Bewegungsrichtung ist durch die Geschwindigkeit und die maximale Abtastrate bestimmt. Soll die Ortsauflösung in der Bewegungsrichtung veränderbar sein, so kann die Bilddatenverarbeitungseinheit 17 eine Antriebseinheit 19 der Transporteinrichtung 5 so ansteuern, dass sich die gewünschte, vorzugsweise konstante Transportgeschwindigkeit v und/oder die gewünschte Abtastrate ergibt. Wie aus Fig. 1 ersichtlich, steuert die Antriebseinheit 19 der Transporteinrichtung 5 eine von einem ansteuerbaren Motor (nicht dargestellt) angetriebene Walze 21 so an, dass die gewünschte Transportgeschwindigkeit v erreicht wird.

Die Bilddatenverarbeitungseinheit 17 kann aus den ihr zugeführten Bilddaten der zeitlich nacheinander abgetasteten Zeileninformationen ein Gesamtbild erzeugen, welches die digitalen Bilddaten umfasst. Dabei kann die Bilddatenverarbeitungseinheit so ausgebildet sein, dass die erste und letzte Zeileninformation eines einem Stückgut zuzuordnenden Bildes automatisch erkannt bzw. die betreffende Zeilennummer erzeugt wird. Mit anderen Worten, die Bilddatenverarbeitungseinheit 17 kann aus dem ihr zugeführten Bilddatensignal S_{B} selbsttätig erkennen, wann die Vorderkante eines zu erfassenden Stückguts erfasst ist und wann dessen Ende erreicht ist. Selbstverständlich können Beginn und Ende eines Gesamtbilds auch durch einen separaten Sensor (nicht dargestellt) erkannt werden, der beispielsweise als Lichtschranke ausgebildet ist, welche die Vorderkante bzw. die rückwärtige Kante eines zu erfassenden Stückgutes detektiert. Die Lichtschranke kann auch eine gewisse Strecke vor der durch die Erfassungslinie, in welcher die Sensorzeile 13 angeordnet ist, vorgesehen sein. Hierdurch ergibt sich ein gewisser Vorlauf bzw. Nachlauf für das Gesamtbild, in dessen mittlerem Bereich das Stückgut 3 erfasst wird.

Da erfindungsgemäß zur Erfassung der Struktur der Stückgüter 3 das Dual-Energy-Verfahren bzw. Multi-Energy-Verfahren angewendet werden soll, werden entlang der Erfassungslinie der Sensorzeile 13 zwei oder mehrere unterschiedliche Typen von Erfassungspositionen definiert. Diese Erfassungspositionen sind in Fig. 1 für zwei Typen von Erfassungspositionen durch die hellen bzw. dunklen Rechtecke der Sensorzeile 13 dargestellt. Sie sind mit p₁ bis pₙ bezeichnet. Die unterschiedlichen Typen von Erfassungspositionen p₁ bis pₙ unterscheiden sich dadurch, dass die Röntgenstrahlungsdetektoreinrichtung 11 an diesen Erfassungspositionen jeweils unterschiedliche spektrale Detektorempfindlichkeiten aufweist. Beispielsweise kann an den hell dargestellten Erfassungspositionen der Sensorzeile 13 die Röntgenstrahlungsdetektoreinrichtung 11 so ausgebildet sein, dass das gesamte Spektrum (Energiespektrum), welches von der Röntgenstrahlungsquelle 9 erzeugt wird, ungefiltert detektierbar ist. Die dunkel dargestellten Erfassungspositionen p₁ bis pₙ können so ausgebildet sein, dass hier eine Kantenfiltercharakteristik, beispielsweise eine Hochpasscharakteristik für die spektrale Empfindlichkeit (Energiespektrum) realisiert ist. Beispielsweise können hier Strahlungsquanten mit einer geringeren Energie als durch eine vorgegebene Filterkante festgelegt, unterdrückt bzw. herausgefiltert werden. An diesen dunklen Erfassungspositionen werden somit nur Röntgenstrahlungsquanten detektiert, die eine bestimmte Energieschwelle überschreiten. Die Erfassungspositionen p₁ bis pₙ einer Sensorzeile können von ihrer geometrischen Ausdehnung her gesehen mit der geometrischen Ausdehnung der empfindlichen Fläche jeweils eines Sensors 15 übereinstimmen. Es ist jedoch selbstverständlich ebenfalls möglich, dass die geometrische Ausdehnung einer Erfassungsposition pᵢ (i=1 ... n) durch mehrere Sensoren 15 bzw. deren aktiver Empfangsfläche realisiert ist.

Somit kann die Bilddatenverarbeitungseinheit 17 aus dem ihr zugeführten Bilddatensignal S_{B} zwei streifenförmige Bilder extrahieren, wobei das eine Bild durch die hellen Erfassungspositionen und das andere Bild durch die dunklen Erfassungspositionen der Röntgenstrahlungsdetektoreinrichtung 11 bzw. durch die diesen Erfassungspositionen jeweils zugeordneten Sensoren 15 festgelegt ist.

Die unterschiedlichen Typen von Erfassungspositionen p₁ bis pₙ lassen sich auf verschiedene Weise realisieren. Eine vorstehend beschriebene Kantenfiltercharakteristik kann beispielsweise durch die Verwendung von Filtermaterialien unterschiedlicher Dichte erreicht werden. Beispiele hierfür sind in der CN 101455573 A angegeben. Das in dieser Schrift für einen Flächensensor beschriebene flächenhafte Streifen-Ortsfilter muss für den in Fig. 1 der vorliegenden Beschreibung dargestellten Anwendungsfall selbstverständlich nur so lange Streifen aufweisen, dass sich diese über die geometrische Ausdehnung der Erfassungspositionen in der Bewegungsrichtung erstrecken.

An dieser Stelle sei nochmals erwähnt, dass zur Realisierung eines Multi-Energy-Verfahrens selbstverständlich ein Streifenfilter mit einer entsprechenden Anzahl von Typen von Streifen mit unterschiedlicher Filtercharakteristik vorgesehen werden müssen, um eine entsprechende Anzahl von Bildern gewinnen zu können, die jeweils unterschiedliche Informationen beinhalten.

Als Filter können nicht nur Kantenfilter, sondern beliebige Filter verwendet werden, welche aus dem Sendespektrum der Röntgenstrahlungsquelle ein vorteilhaftes Spektrum (mit einem vorteilhaften spektralen Verlauf) erzeugt wird.

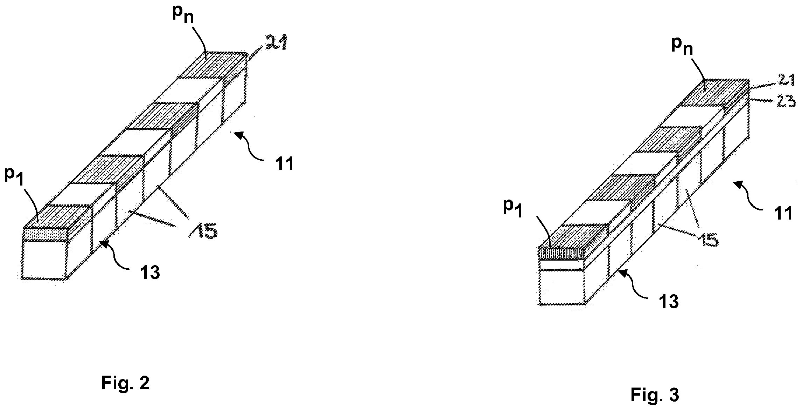

Ein derartiges Streifenfilter mit zwei unterschiedlichen Streifentypen ist in Fig. 2 für die dargestellte Sensorzeile 13 (nach Fig. 1) als unmittelbar auf den einzelnen strahlungsempfindlichen Sensoren 15 (für das direkte Detektieren der Röntgenstrahlung) aufgebrachte Filterschicht 21 dargestellt. Die Filterschicht 21 weist in den jeweils hell bzw. dunkel dargestellten Erfassungspositionen die gewünschten unterschiedlichen spektralen Absorptionseigenschaften bzw. Filtereigenschaften auf. Beispielsweise kann die Filterschicht 21 in den hell dargestellten Bereichen (Erfassungspositionen) aus Kunststoff bestehen und in den dunkel dargestellten Bereichen aus Kupfer, wobei Kupfer hier als Kantenfilter mit Hochpasswirkung dient, d.h. es werden nur solche Strahlungsquanten transmittiert, deren Energie größer ist als eine vorgegebene Grenzenergie.

Die Filterschicht kann beispielsweise so hergestellt werden, dass zunächst eine Kunststoffschicht und darüber eine Kupferschicht auf die Sensoren 15 aufgebracht werden. Anschließend kann in den hell dargestellten Erfassungspositionen die Kupferschicht entfernt, beispielsweise weggeätzt werden.

Selbstverständlich kann die Filterschicht 21 auch als separate Filterkomponente der Röntgenstrahlungsdetektoreinrichtung 11 in den Strahlengang zwischen dem durchstrahlten Stückgut 3 und den Sensoren 15 der Röntgenstrahlungsdetektoreinrichtung 11 eingebracht sein. Hierbei ist jedoch auf eine exakte Positionierung und Ausrichtung der durch das Filter definierten Erfassungspositionen relativ zu den Sensoren zu achten.

Nach einer anderen, nicht dargestellten Ausführungsform kann die Röntgenstrahlungsdetektoreinrichtung auch so ausgebildet sein, dass einzelne Sensoren inhärent unterschiedliche spektrale Detektorcharakteristiken aufweisen. Allerdings ist ein derartiger Detektor nur mit deutlich größerem Aufwand herstellbar.

Da es für industrielle Anwendungen von großer Bedeutung ist, dass entsprechende Vorrichtungen zum Erfassen der Struktur von bewegten Stückgütern mit möglichst geringem Aufwand hergestellt werden können, bietet es sich an, einfache, preiswerte Zeilendetektoren, die in großer Länge und mit hoher Auflösung zu geringen Kosten verfügbar sind, zu verwenden und diese mit einer entsprechenden Filterschicht zu kombinieren, wobei die Filterschicht entweder unmittelbar auf der Oberfläche der Sensoren aufgebracht sein kann, oder, wie vorstehend beschrieben, als separate Komponente.

Da kostengünstige Zeilendetektoren zur Erfassung von elektromagnetischer Strahlung im optischen Bereich ausgebildet sind, bietet es sich an, wie in Fig. 3 dargestellt, zusätzlich zu einer Filterschicht 21 eine Szintillatorschicht 23 zu verwenden, welche zwischen der Filterschicht 21 und der Detektoroberfläche der Sensoren 15 vorgesehen ist. Die Szintillatorschicht 23 wandelt die durch die Filterschicht 21 transmittierten Anteile der auftreffenden Röntgenstrahlung in eine elektromagnetische Strahlung im optischen Spektrum um, welche dann von den Detektoren 15 detektiert werden kann. Auf diese Weise kann somit ein einfacher und kostengünstiger Röntgenstrahlungsdetektor hergestellt werden.

Nach einer nicht dargestellten Ausführungsform können Das Filter und der Szintillator auch losgelöst von den Sensoren als Einheit ausgebildet sein. Damit ist es möglich, geeignete herkömmliche Dektektoren für Röntgenstrahlung, beispielsweise herkömmliche Zeilenkameras für Röntgenstrahlung, zur einer Detektoreinheit für eine erfindungsgemäße Vorrichtung nachzurüsten. Zudem wird kann eine derartige separate Einheit mit einfachen Mitteln hochgenau zum Strahlengang der Röntgenstrahlungssensoren justiert werden. Beispielsweise kann die Einheit Positioniermarken aufweisen (z.B. mit Licht im sichtbaren Spektrum durchstrahlbare Positioniermarken außerhalb des Filterbereichs), mit denen die Einheit unter Verwendung von sichtbarem Licht einfach und exakt relativ zu den Sensoren justiert werden kann. Zur Justierung kann eine einfache Kamera für sichtbares Licht verwendet werden, die jedoch deutlich hochauflösender ist, als die Röntgenstrahlungssensoren.

Die Bilddatenverarbeitungseinheit 17 kann aus den von ihr ermittelten Teilbildern, denen jeweils die unterschiedlichen Typen von vorzugsweise alternierend angeordneten Erfassungspositionen zugeordnet sind, wie an sich bekannt, ein Ergebnisbild berechnen. Hierzu können aus den Bilddaten der Teilbilder durch entsprechende mathematische Verfahren, beispielsweise Interpolationsverfahren oder durch Anwendung der Fast-Fourier-Transformation, Werte für die Bilddaten des betreffenden Teilbildes an den Positionen des anderen Teilbildes ermittelt werden. An diesen Positionen können die Bilddaten der beiden Bilder dann jeweils durch eine gewichtete, das Vorzeichen berücksichtigende Addition kombiniert werden. Auf diese Weise lassen sich bestimmte Strukturen von zu untersuchenden Stückgütern besser im Ergebnisbild hervorheben.

Selbstverständlich ist es auch möglich, dass die Bilddaten sämtlicher Teilbilder verwendet werden, um mit geeigneten mathematischen Verfahren die jeweils zugehörigen Bilddaten an vorgegebenen Positionen (innerhalb der Zeile) zu berechnen. An diesen Positionen kann dann wiederum eine gewichtete Addition erfolgen.

Die zeilenweise ermittelten Ergebnisbilder können dann zu einem Gesamtergebnisbild kombiniert werden, welches das gesamte Stückgut 3 (oder einen vorgegebenen Ausschnitt) beinhaltet. Selbstverständlich kann dabei auch in der Abtastung in der Bewegungsrichtung eine Berechnung von Bilddaten in beliebigen Zwischenpositionen erfolgen.

Die Bilddatenverarbeitungseinheit 17 kann die Zeilenbilder oder das gesamte Ergebnisbild einer übergeordneten Einheit 25 zuführen, wobei diese übergeordnete Einheit 25 auch eine Anzeigeeinheit für das Gesamtergebnisbild und/oder die einzelnen Teilbilder (vor deren Überlagerung) umfassen kann. Die Bilddatenverarbeitungseinheit 17 kann auch eine Überprüfung der Teil-Ergebnisbilder oder des gesamten Ergebnisbildes anhand der ermittelten und verrechneten Bilddaten vornehmen. Beispielsweise kann das Ergebnisbild mit Mitteln der Mustererkennung auf Störstrukturen untersucht werden. So könnten beispielsweise unzulässigerweise vorhandene Feststoffe oder Festkörper in flüssigen oder pastösen Produkten, wie beispielsweise Joghurt, erkannt werden. Selbstverständlich lassen sich auch beliebige Strukturen mit diesem Verfahren auf bestimmte Struktureigenschaften hin untersuchen.

Selbstverständlich kann anstelle oder zusätzlich zu einer rechnerischen Auswertung der Ergebnisbilder auch eine visuelle Prüfung durch eine Bedienperson der betreffenden Vorrichtung erfolgen. Hierzu kann, wie vorstehend ausgeführt, eine Anzeigeeinheit (nicht dargestellt) vorgesehen sein. Eine solche Ausführungsform kann beispielsweise zur Gepäckanalyse auf Flughäfen verwendet werden.

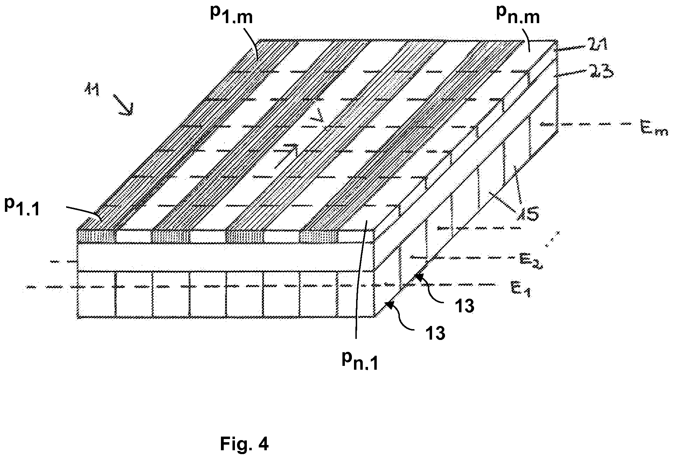

Fig. 4 zeigt in schematischer, perspektivischer Darstellung eine weitere Variante einer Röntgenstrahlungsdetektoreinrichtung 11. Diese besteht wiederum aus einer Vielzahl von Sensoren 15, die jedoch in diesem Fall nicht nur in Fall einer Zeile, sondern in Form einer Mehrzahl oder Vielzahl von Zeilen angeordnet sind. Jede Sensorzeile 13 verläuft entlang einer zugeordneten Erfassungslinie E₁, E₂, ..., Eₘ. Jede Sensorzeile 13 verfügt wieder über eine Anzahl n von Sensoren 15, so dass im dargestellten Ausführungsbeispiel eine Sensormatrix bzw. eine Matrix von Erfassungspositionen p_{i,j} der Dimension n x m (i=1 ... n; j=1 ... m) entsteht. Selbstverständlich könnten die einzelnen Sensorzeilen auch nicht unmittelbar benachbart, sondern mit einem vorgegebenen Abstand angeordnet sein.

Über den Sensorzeilen 13 ist wiederum eine Szintillatorschicht 23 vorgesehen. Auf der Szintillatorschicht 23 ist eine Filterschicht 21 ausgebildet, welche eine streifenförmige Struktur aufweist. Die Streifen konstanter Breite verlaufen parallel zur Bewegungsrichtung der Stückgüter 3, d.h. senkrecht zu den Sensorzeilen 13 bzw. deren Erfassungslinien E₁ bis Eₘ. Somit lässt sich die Röntgenstrahlungsdetektoreinrichtung 11 gemäß Fig. 4 durch eine Anzahl von m unmittelbar hintereinander angeordneter Röntgenstrahlungsdetektoreinrichtungen 11 bzw. Sensorzeilen 13 erzeugen, wie sie bei der Ausführungsform in Fig. 1 beschrieben wurde. Das Auslesen der Bildinformationen der Röntgenstrahlungsdetektoreinrichtung 11 gemäß Fig. 4 kann wiederum zeilenweise erfolgen. Dabei kann für jede einzelne Sensorzeile ein entsprechendes Bilddatensignal erzeugt werden, so dass alle m Bilddatensignale parallel der Bilddatenverarbeitungseinheit zugeführt werden können. Wird die Anzahl der Sensorzeilen jedoch zu groß, so können auch Gruppen von Sensorzeilen 13 in Bezug auf das Übertragen der Bilddateninformationen an die Bilddatenverarbeitungseinheit 17 seriell aneinandergereiht zusammengefasst werden, wobei pro Gruppe jeweils nur ein Bilddatensignal erzeugt wird.

Mit einer derartigen Röntgenstrahlungsdetektoreinrichtung 11 gemäß Fig. 4 können in einer ersten Variante ein größerer Ausschnitt des zu erfassenden Stückguts 3 oder gar das gesamte Stückgut 3 zeitgleich erfasst werden. Wird nur jeweils ein Ausschnitt des zu erfassenden Stückguts detektiert, so lässt sich das Gesamtbild durch die Überlagerung mehrerer Teilbilder in Bewegungsrichtung zusammensetzen. Die Teilbilder können dabei auch überlappend aufgenommen werden und erst bei der Erzeugung des Gesamtbildes entsprechend zusammengesetzt werden. Dies kann anhand des Detektierens bestimmter Teilstrukturen oder der äußeren Geometrie erfolgen, die in jeweils aufeinanderfolgenden Teilbildern enthalten sind.

Die den unterschiedlichen spektralen Energiebereichen zugeordneten Teilbilder können in entsprechender Weise berechnet werden, wie dies zuvor in Verbindung mit der Ausführungsform gemäß den Fig. 1 bis 3 erläutert wurde. Die Röntgenstrahlungsdetektoreinrichtung 11 gemäß Fig. 4 kann selbstverständlich auch in anderen Varianten hergestellt werden. Beispielsweise kann das Streifenfilter 21 und/oder die Szintillatorschicht 23 als eigenständige Komponente im Strahlengang positioniert sein. Diesbezüglich sei auf die vorbeschrieben Varianten in Verbindung mit der Röntgenstrahlungsdetektoreinrichtung 11 gemäß Fig. 1 bis Fig. 3 verwiesen. Dies gilt selbstverständlich auch für die Variante, bei der die Sensoren 15 bereits eine jeweils unterschiedliche spektrale Detektorempfindlichkeit aufweisen.

Denkbar wäre auch eine Variante, wonach die Szintillatorschicht entsprechend den Erfassungspositionen entlang jeder Erfassungslinie eine unterschiedliche spektrale Charakteristik aufweist, so dass die Teilbilder dadurch entstehen, dass in der einen Erfassungsposition die Szintillatorschicht so ausgebildet ist, dass ein erster Ausschnitt des Röntgenspektrums in eine detektierbare optische Strahlung umgesetzt wird, während an den jeweils anderen Erfassungspositionen ein anderer spektraler Ausschnitt in eine detektierbare optische Strahlung gewandelt wird.

Die aus m Detektorzeilen bestehende Röntgenstrahlungsdetektoreinrichtung 11 gemäß Fig. 4 kann jedoch auch so beschaffen sein, dass die während eines bestimmten Belichtungsintervalls von den Sensoren einer bestimmten Sensorzeile 13 erzeugte Ladungsmenge am Ende des betreffenden Zeitintervalls jeweils an die in Bewegungsrichtung des Stückguts nächste Sensorzeile bzw. an die betreffenden Sensoren derselben Spalte übertragen wird. Während des nächsten Zeitintervalls wird zu dieser übertragenen Ladung der Sensoren dieser Sensorzeile 13 weitere Ladung hinzugefügt, entsprechend der während dieser Belichtungsphase detektierten Röntgenstrahlung. Entspricht der Quotient aus dem Abstand der Erfassungslinien in Bewegungsrichtung (eine äquidistante Verteilung der Sensorzeilen vorausgesetzt) und der jeweils konstanten Belichtungsphase bzw. der konstanten Länge des zeitlichen Belichtungsintervalls (nachdem jeweils die Ladung an die jeweils nächste Sensorzeile 13 weitergereicht wird) der Bewegungsgeschwindigkeit v des Stückguts auf der Transporteinrichtung 5, so entspricht die in jeder Sensorzeile in den betreffenden Sensoren 15 erzeugte Ladung jeweils der Röntgenstrahlung die durch die selbe, im Wesentlichen vertikale "Scheibe" des zu erfassenden Stückguts hindurchtritt (d.h. auf im Wesentlichen demselben Pfad). Es wird somit eine m-fache "Belichtung" erreicht, wodurch sich ein drastisch verbessertes Bildsignal ergibt.

Dieses Verfahren ist als TDI (Time-Delay Integration) Verfahren bekannt.

In diesem Fall muss lediglich das Bildsignal der in Bewegungsrichtung letzten Zeile der Röntgenstrahlungsdetektoreinrichtung 11 gemäß Fig. 4 ausgelesen und als Bildsignal der Bilddatenverarbeitungseinheit 17 zugeführt werden. Diese kann dann dieses Signal in exakt derselben Weise weiterbearbeiten, wie dies im Fall der Ausführungsform gemäß Fig. 1 vorstehend erläutert wurde.

Durch die Kombination des TDI-Verfahrens mit der Verwendung eines Streifenfilters als Ortsfilter ergibt sich eine extrem einfache und kostengünstige Variante zur Erfassung der Struktur eines bewegten Stückguts mittels einer Durchstrahlung des Stückguts mit einer Röntgenstrahlung.

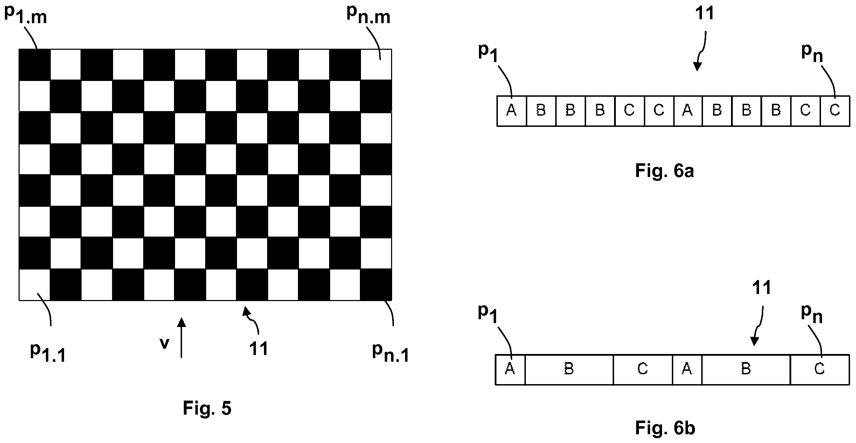

Fig. 5 zeigt eine Draufsicht auf eine Röntgenstrahlungsdetektoreinrichtung 11, welche, ebenso wie die Röntgenstrahlungsdetektoreinrichtung 11 in Fig. 4, zweit Typen von matrixförmig angeordneten Erfassungspositionen p_{i,j} (i=1 ... n; j=1 ... m) aufweist, die jeweils durch die weiß bzw. schwarz dargestellten Quadrate symbolisiert sind. Anders als bei der Ausführungsform in Fig. 4 sind die Erfassungspositionen hier jedoch nicht streifenförmig (mit einer Längsrichtung der Streifen in Bewegungsrichtung), sondern in Form eines Schachbrettmusters angeordnet, wobei die Achsen bzw. Hauptrichtungen des Schachbrettmusters (d.h. die Richtungen der Streifen mit alternierenden Typen von Erfassungspositionen) quer zur Bewegungsrichtung (und gleichzeitig im Wesentlichen senkrecht zur Bestrahlungsrichtung) bzw. in Bewegungsrichtung verlaufen.

Hierdurch ergibt sich gegenüber der Ausführungsform nach Fig. 4 der Vorteil, dass zur Berechnung des Wertes an einer Erfassungsposition, an welcher für das betreffende Teilbild kein Wert erfasst wird, nicht nur benachbarte erfasste Werte derselben Erfassungslinie herangezogen werden können, sondern auch erfasste Werte, die in Richtung der Bewegungsrichtung benachbart liegen. Beispielsweise können zur Berechnung des Wertes eines Teilbildes an der Erfassungsposition p_{i,j} (an welcher für das betreffende Teilbild kein Wert erfasst wurde, weil diese Erfassungsposition dem anderen der beiden Teilbilder zugeordnet ist) die Werte der Erfassungspositionen p_{i-1,j} und p_{i+i,j} (d.h. die in der betreffenden Erfassungszeile benachbarten, erfassten Werte) und die Werte der Erfassungspositionen p_{i,j-1}, p_{i,j+1 j} (d.h. die in der Bewegungsrichtung benachbarten, erfassten Werte) herangezogen werden. Selbstverständlich sind zu einer derartigen Berechnung auch beliebige andere zweidimensionale Berechnungsverfahren (z.B. die zweidimensionale diskrete Fourier-Transformation) einsetzbar. Diese Ausführungsform nach Fig. 5 ist insbesondere auch für die statische Erfassung eines Stückguts 3 geeignet, d.h. es wird eine zweidimensionale Erfassung des Stückguts 3 im Ruhezustand (Geschwindigkeit gleich null) durchgeführt. Diese Ausführungsform ist nicht Teil der Erfindung. Es ist sogar möglich, auch bei Verwendung einer derartigen Röntgenstrahlungsdetektoreinrichtung das vorstehend beschriebene TDI-Verfahren einzusetzen. In diesem Fall müssen jedoch für das Aufintegrieren bzw. Aufsummieren der erfassten Werte an den Positionen der jeweiligen Teilbilder, die in einer Abtastposition des Stückguts 3 erfasst werden, um jeweils zwei Zeilen (oder Erfassungspositionen in Bewegungsrichtung) oder ein ganzzahliges Vielfaches hiervon, "weitergeschoben" werden. Nur hierdurch kann gewährleistet werden, dass pro Teilbild ausschließlich Werte aufaddiert werden, die am selben Typ der Erfassungspositionen detektiert werden.

Für das "Weiterschieben" von Teilbildern um zwei oder mehr Zeilen bzw. Erfassungspositionen empfiehlt sich die Verwendung eines separaten Speichers, der als Hintergrundspeicher bezeichnet werden kann. Ein üblicher TDI-Sensor, bei dem die das jeweilige Teilbild repräsentierende Ladung eines Pixels (d.h. in einer Erfassungsposition) jeweils an das in Bewegungsrichtung des Stückguts 3 folgende Pixel bzw. die betreffende Erfassungsposition weitergegeben wird, kann hier nicht mehr in vorteilhafter Weise eingesetzt werden. Denn bei Verwendung einer kontinuierlichen Strahlung würde das Erfassungsergebnis für ein Teilbild verfälscht, wenn sich die das Teilbild repräsentierende Ladung bzw. die das Teilbild repräsentierenden Daten - wenn auch nur für sehr kurze Zeit - an einer Erfassungsposition, befinden würde, an welcher ein anderes der Teilbilder erfasst wird. Es ist daher vorteilhaft, die Teilbilddaten bzw. die betreffenden Ladungen nach jedem (einzelnen) Erfassungsvorgang in den Hintergrundspeicher auszulesen und über den Umweg über den Hintergrundspeicher in die betreffenden "weitergeschobenen" Erfassungspositionen zurückzuschieben. Alternativ kann das Aufintegrieren der einzelnen Werte pro Teilbild auch in dem Hintergrundspeicher erfolgen, wobei in diesem Fall beim Auslesen in den Hintergrundspeicher das Verschieben um 2n Zeilen berücksichtigt werden müsste.

Die Figuren 6a und 6b zeigen schematische Draufsichten auf zeilenförmige angeordnete Erfassungspositionen bzw. zeilenförmige Röntgenstrahlungsdetektoreinrichtungen 11, wobei hier drei unterschiedliche Typen von Erfassungspositionen verwendet sind, die mit A, B und C bezeichnet sind.

Bei der Variante in Fig. 6a sind die Erfassungspositionen unterschiedlichen Typs jeweils flächengleich und können durch identische Sensoren 15 realisiert werden, die mit unterschiedlichen Typen von Filtern bzw. Filterschichten 21 und/oder Szintillatoren bzw. Szintillatorschichten, 23 kombiniert sind. Wie aus Fig. 6a ersichtlich, kann die Reihenfolge der Typen von Erfassungspositionen beliebt gewählt werden. Es ist nicht zwingend erforderlich, dass eine streng alternierende Reihenfolge (ABCABC) eingehalten wird. Vielmehr kann diese Struktur den jeweiligen Bedürfnissen angepasst werden.

Die Variante nach Fig. 6b zeigt, dass die Breite der Erfassungspositionen p₁ bis pₙ entlang einer Erfassungslinie auch durch die Verwendung von unterschiedlich breiten Sensoren 15 und/oder durch die Verwendung von unterschiedlich breiten Flächen (Streifen in Bewegungsrichtung) von Filtern bzw. Filterschichten 21 und/oder Szintillatoren bzw. Szintillatorschichten, 23 gewählt werden kann.

### Bezugszeichenliste

- 1: Vorrichtung zum Erfassen der Struktur von bewegten Stückgütern
- 3: Stückgut
- 5: Transporteinrichtung / Bandförderer
- 7: Förderband
- 9: Röntgenstrahlungsquelle
- 11: Röntgenstrahlungsdetektoreinrichtung
- 13: Sensorzeile
- 15: Sensoren der Sensorzeile
- 17: Bilddatenverarbeitungseinheit
- 19: Antriebseinheit
- 21: Filterschicht
- 23: Szintillatorschicht
- 25: übergeordnete Einheit

- p₁: Erfassungsposition (i=1 ... n)
- p_{i,j}: Erfassungsposition (i=1 ... n; j=1 ... m)

- S_{B}: Bilddatensignal
- V: Bewegungsgeschwindigkeit des Stückgutes

## Patentansprüche

1. Verfahren zum Erfassen der Struktur von bewegten Stückgütern, insbesondere zur Erfassung von Störpartikeln in flüssigen oder pastösen Produkten,
(a) bei dem ein zu erfassendes, entlang einer vorgegebenen Richtung bewegtes Stückgut (3) mit einer breitbandigen Röntgenstrahlung durchstrahlt wird, und
(b) bei dem entlang mindestens einer vorgegebenen ortsfesten Erfassungslinie (E₁ bis Eₘ) quer zur Bewegungsrichtung die durch das Stückgut (3) hindurch getretene Strahlung detektiert wird, wobei jeder Erfassungslinie (E₁ bis Eₘ) eine Abtastposition des Stückguts (3) in der Bewegungsrichtung entspricht,
(c) wobei entlang der mindestens einen Erfassungslinie (E₁ bis Eₘ) für jede Abtastposition des Stückguts (3) jeweils zeitgleich wenigstens ein erstes Teilbild für einen ersten spektralen Ausschnitt der Röntgenstrahlung detektiert und ein zweites Teilbild für einen zweiten spektralen Ausschnitt oder das gesamte Spektrum der Röntgenstrahlung detektiert und jeweils in Teilbilddaten umgewandelt wird,
(i) wobei jedem der wenigstens zwei Teilbilder jeweils eine Mehrzahl von entlang der Erfassungslinie (E₁ bis Eₘ) angeordneten diskreten Erfassungspositionen eindeutig zugeordnet ist, wobei die Erfassungspositionen in einer vorgegebenen Reihenfolge entlang der Erfassungslinie (E₁ bis Eₘ) angeordnet sind,
(ii) wobei an den einem Teilbild zugeordneten Erfassungspositionen zur Erzeugung der betreffenden Teilbilddaten jeweils ein Wert für die Strahlungsenergie im betreffenden spektralen Ausschnitt ermittelt wird, und
(d) wobei die Teilbilddaten des wenigstens einen ersten und zweiten Teilbildes zur Verbesserung der Erkennbarkeit in Bezug auf vorgegebene Charakteristika der Struktur des Stückguts (3) rechnerisch zu wenigstens einem Teil-Ergebnisbild verknüpft werden,
**dadurch gekennzeichnet,**
(e) **dass** wenigstens zwei Erfassungslinien (E₁ bis Eₘ) vorgesehen sind, die einen vorgegebenen Abstand in der Bewegungsrichtung aufweisen, dass die einem Teilbild zugeordneten Erfassungspositionen der wenigstens zwei Erfassungslinien (E₁ bis Eₘ) in gleicher Weise entlang jeder Linie angeordnet sind, wobei die Position und Ausrichtung jeder weiteren Erfassungslinie (E₁ bis Eₘ) durch eine Verschiebung einer ersten Erfassungslinie (E₁ bis Eₘ) in der Bewegungsrichtung erzeugbar ist, und
(f) **dass** die Röntgenstrahlung an den wenigstens zwei Erfassungslinien (E₁ bis Eₘ) derart zeitversetzt detektiert wird, dass an jeder Erfassungslinie (E₁ bis Eₘ) Strahlung detektiert wird, welche das Stückgut (3) im Wesentlichen auf demselben Pfad durchdrungen hat, und dass die an jeder Erfassungslinie (E₁ bis Eₘ) detektierten Teilbilddaten jedes Teilbildes aufaddiert werden.

2. Verfahren nach Anspruch 1, **dadurch gekennzeichnet, dass** die Teil-Ergebnisbilder aller Abtastpositionen zu einem Ergebnisbild kombiniert werden.

3. Verfahren nach Anspruch 1 oder 2, **dadurch gekennzeichnet, dass** die Erfassungspositionen eines Teilbildes entlang der betreffenden Linie äquidistant und hinsichtlich des Abstandes so gewählt sind, dass sich eine zu erfassende Struktur des Stückguts (3) mit einer vorgegebenen minimalen Ausdehnung entlang der wenigstens einen Erfassungslinie (E₁ bis Eₘ) über wenigstens zwei Erfassungspositionen erstreckt.

4. Verfahren nach einem der vorhergehenden Ansprüche, **dadurch gekennzeichnet, dass** die Abtastpositionen in der Bewegungsrichtung des Stückguts äquidistant und hinsichtlich des Abstandes so gewählt sind, dass sich eine zu erfassende Struktur des Stückguts (3) mit einer vorgegebenen minimalen Ausdehnung in der Bewegungsrichtung über wenigstens zwei Abtastpositionen erstreckt.

5. Verfahren nach einem der vorhergehenden Ansprüche, **dadurch gekennzeichnet, dass** aus den detektierten Teilbilddaten eines jeden der wenigstens zwei Teilbilder jeweils mittels einer vorgegebenen Transformationsvorschrift die Werte des betreffenden Teilbildes an ausgewählten oder an allen Erfassungspositionen eines weiteren der wenigstens zwei Teilbilder berechnet werden, und dass aus den detektierten und berechneten Teilbilddaten von zwei oder mehreren der Teilbilder ein Teil-Ergebnisbild berechnet wird, vorzugsweise durch eine gewichtete, das Vorzeichen der Gewichtungsfaktoren berücksichtigende Addition der Teilbilddaten an jeweils identischen Positionen.

6. Verfahren nach einem der vorhergehenden Ansprüche, **dadurch gekennzeichnet, dass** jedes Teil-Ergebnisbild oder das vollständige Ergebnisbild oder vorgegebene Ausschnitte des Ergebnisbildes hinsichtlich des Vorliegens von zu detektierenden Störcharakteristika geprüft wird, vorzugsweise unter Verwendung eines Mustererkennungsverfahrens.

7. Vorrichtung zum Erfassen der Struktur von bewegten Stückgütern, insbesondere zur Erfassung von Störpartikeln in flüssigen oder pastösen Produkten,
(a) mit einer Transporteinrichtung (5) zum Bewegen eines zu erfassenden Stückgutes (3) entlang einer vorgegebenen Richtung,
(b) mit einer Röntgenstrahlungsquelle (9) zur Erzeugung einer breitbandigen Röntgenstrahlung, welche so gerichtet ist, dass das zu erfassende Stückgut (3) während seiner Bewegung durchstrahlt wird,
(c) mit einer Röntgenstrahlungsdetektoreinrichtung (11), welche entlang mindestens einer vorgegebenen ortsfesten Erfassungslinie (E₁ bis Eₘ) quer zur Bewegungsrichtung die durch das Stückgut (3) hindurch getretene Strahlung detektiert wird, wobei jeder Erfassungslinie (E₁ bis Eₘ) eine Abtastposition entspricht, und wobei die Röntgenstrahlungsdetektoreinrichtung (11) so ausgebildet ist,
(i) dass an entlang der mindestens einen Erfassungslinie (E₁ bis Eₘ) vorgesehenen Erfassungspositionen wenigstens ein erstes Teilbild für einen ersten spektralen Ausschnitt der Röntgenstrahlung detektiert und ein zweites Teilbild für einen zweiten spektralen Ausschnitt oder das gesamte Spektrum der Röntgenstrahlung detektiert und jeweils in Teilbilddaten umgewandelt wird,
(ii) wobei jedem der wenigstens zwei Teilbilder jeweils eine Mehrzahl von entlang der mindestens einen Erfassungslinie (E₁ bis Eₘ) angeordneten diskreten Erfassungspositionen eindeutig zugeordnet ist, welche in einer vorgegebenen Reihenfolge entlang der Erfassungslinie (E₁ bis Eₘ) angeordnet sind und wobei an jeder Erfassungsposition jeweils ein Wert für die Strahlungsenergie im betreffenden spektralen Ausschnitt ermittelt wird, und
(d) mit einer Bilddatenverarbeitungseinheit (17), welcher die von der Röntgenstrahlungsdetektoreinrichtung (11) erzeugten Teilbilddaten zugeführt werden und welche die Teilbilddaten des wenigstens einen ersten und zweiten Bildes zur Verbesserung der Erkennbarkeit in Bezug auf vorgegebene Charakteristika der Struktur des Stückguts rechnerisch zu wenigstens einem Teil-Ergebnisbild verknüpft,
**dadurch gekennzeichnet,**
(e) **dass** die Röntgenstrahlungsdetektoreinrichtung (11) wenigstens zwei Erfassungslinien (E₁ bis Eₘ) oder zwei Gruppen von Erfassungslinien (E₁ bis Eₘ) umfasst, die einen vorgegebenen Abstand in der Bewegungsrichtung aufweisen, dass die einem Teilbild zugeordneten Erfassungspositionen der wenigstens zwei Erfassungslinien (E₁ bis Eₘ) oder der wenigstens zwei Gruppen von Erfassungslinien (E₁ bis Eₘ) in gleicher Weise entlang jeder Linie angeordnet sind, wobei die Position und Ausrichtung jeder weiteren Erfassungslinie (E₁ bis Eₘ) oder Gruppe von Erfassungslinien (E₁ bis Eₘ) durch eine Verschiebung einer ersten Erfassungslinie (E₁ bis Eₘ) oder einer ersten Gruppe von Erfassungslinien (E₁ bis Eₘ) in der Bewegungsrichtung erzeugbar ist und
(f) **dass** die Röntgenstrahlungsdetektoreinrichtung (11) die Röntgenstrahlung an den wenigstens zwei Erfassungslinien (E₁ bis Eₘ) oder Gruppen von Erfassungslinien (E₁ bis Eₘ) während jeweils eines Erfassungsintervalls derart zeitversetzt detektiert, dass während jedes Erfassungsintervalls Strahlung detektiert wird, welche das Stückgut (3) im Wesentlichen auf demselben Pfad durchdrungen hat.

8. Vorrichtung nach Anspruch 7, **dadurch gekennzeichnet, dass** die Bilddatenverarbeitungseinheit (17) die Teil-Ergebnisbilder aller Abtastpositionen zu wenigstens einem Ergebnisbild kombiniert.

9. Vorrichtung nach Anspruch7 oder 8, **dadurch gekennzeichnet, dass** die Erfassungspositionen eines Teilbildes entlang der betreffenden Erfassungslinie (E₁ bis Eₘ) äquidistant und hinsichtlich des Abstandes so gewählt sind, dass sich eine zu erfassende Struktur des Stückguts mit einer vorgegebenen minimalen Ausdehnung entlang der wenigstens einen Linie über wenigstens zwei Erfassungspositionen erstreckt.

10. Vorrichtung nach einem der Ansprüche 7 bis 9, **dadurch gekennzeichnet, dass** die Abtastpositionen eines Bildes in der Bewegungsrichtung des Stückguts äquidistant und hinsichtlich des Abstandes so gewählt sind, dass eine zu erfassende Struktur des Stückguts mit einer vorgegebenen minimalen Ausdehnung in der Bewegungsrichtung in wenigstens zwei Abtastpositionen erstreckt.

11. Vorrichtung nach einem der Ansprüche 7 bis 10, **dadurch gekennzeichnet, dass** die Bilddatenverarbeitungseinheit (17) aus den detektierten Teilbilddaten eines jeden der wenigstens zwei Teilbilder jeweils mittels einer vorgegebenen Transformationsvorschrift die Werte des betreffenden Teilbildes an ausgewählten oder an allen Erfassungspositionen eines weiteren der wenigstens zwei Teilbilder berechnet, und dass die Bilddatenverarbeitungseinheit (17) aus den detektierten und berechneten Teilbilddaten von zwei oder mehreren der Teilbilder ein Teil-Ergebnisbild berechnet, vorzugsweise durch eine gewichtete, das Vorzeichen der Gewichtungsfaktoren berücksichtigende Addition der Teilbilddaten an jeweils identischen Positionen.

12. Vorrichtung nach einem der Ansprüche 7 bis 11, **dadurch gekennzeichnet, dass** die Bilddatenverarbeitungseinheit (17) jedes Teil-Ergebnisbild oder das vollständige Ergebnisbild oder vorgegebene Ausschnitte des Ergebnisbildes hinsichtlich des Vorliegens von zu detektierenden Störcharakteristika prüft, vorzugsweise unter Verwendung eines Mustererkennungsverfahrens.

13. Vorrichtung nach einem der Ansprüche 7 bis 12, **dadurch gekennzeichnet, dass** die Röntgenstrahlungsdetektoreinrichtung (11) für jede Erfassungsline (E₁ bis Eₘ) eine entlang der Erfassungslinie (E₁ bis Eₘ) angeordnete Reihe von Strahlungssensoren (15) aufweist, wobei jede Erfassungsposition durch einen oder mehrere Strahlungssensoren gebildet ist.

14. Vorrichtung nach Anspruch 13, **dadurch gekennzeichnet, dass** die Strahlungssensoren (15) der Erfassungspositionen eines Teilbildes eine spektrale Empfindlichkeit aufweisen, die dem spektralen Ausschnitt der von der Röntgenstrahlungsquelle (9) erzeugten Röntgenstrahlung entspricht.

15. Vorrichtung nach Anspruch 13, **dadurch gekennzeichnet, dass** die Röntgenstrahlungsdetektoreinrichtung (11) ein Ortsfilter (21) zur Filterung der zu erfassenden Röntgenstrahlung umfasst, welches zwischen dem Stückgut (3) und den Strahlungssensoren (15) angeordnet ist, wobei das Ortsfilter (21) eine Streifenstruktur aufweist,
(a) wobei jedem zu erfassenden Teilbild ein Satz von Streifen konstanter Breite zugeordnet ist, welche eine dem Teilbild zugeordnete Filtercharakteristik zur Erzeugung des betreffenden spektralen Ausschnitts der Röntgenstrahlung aufweisen,
(b) wobei die Breite der Streifen der Ausdehnung und Position der zugeordneten Erfassungspositionen entlang der betreffenden Erfassungslinie (E₁ bis Eₘ) entspricht.

16. Vorrichtung nach Anspruch 15, soweit dieser auch auf Anspruch 13 rückbezogen ist, **dadurch gekennzeichnet, dass** die Röntgenstrahlungsdetektoreinrichtung (11) wenigstens zwei Erfassungslinien (E₁ bis Eₘ) umfasst und dass die Streifen des Ortsfilters (21) parallel zur Bewegungsrichtung des Stückguts (3) ausgerichtet sind.

17. Vorrichtung nach einem der Ansprüche 13 bis 16, **dadurch gekennzeichnet, dass** das Ortsfilter (21) integriert mit den Strahlungssensoren (15) der Röntgenstrahlungsdetektoreinrichtung (11) ausgebildet ist.

## Claims

1. Method for capturing the structure of moving individual items, in particular for capturing unwanted particles in liquid or pasty products,
(a) in which an individual item (3) to be captured, which moves along a specified direction, is irradiated with broadband X-ray radiation, and
(b) in which the radiation that has passed through the individual item (3) is detected along at least one specified positionally fixed capturing line (E₁ to Eₘ) transversely to the movement direction, wherein one scanning position of the individual item (3) in the movement direction corresponds to each capturing line (E₁ to Eₘ),
(c) wherein, along the at least one capturing line (E₁ to Eₘ), for each scanning position of the individual item (3), in each case at least one first partial image for a first spectral portion of the X-rays is detected simultaneously and a second partial image for a second spectral portion or the entire spectrum of the X-rays is detected and in each case converted to partial image data,
(i)wherein each of the at least two partial images is uniquely assigned in each case a plurality of discrete capturing positions arranged along the capturing line (E₁ to Eₘ), wherein the capturing positions are arranged in a specified sequence along the capturing line (E₁ to Eₘ),
(ii) wherein for producing the relevant partial image data in each case a value for the radiation energy in the relevant spectral portion is ascertained at the capturing positions assigned to a partial image, and
(d) wherein, for improving the recognizability with respect to specified characteristics of the structure of the individual item (3), the partial image data of the at least one first and second partial image are linked computationally to form at least one partial resulting image,
**characterized**
(e) **in that** at least two capturing lines (E₁ to Eₘ) are provided which have a specified distance in the movement direction, in that the capturing positions, which are assigned to a partial image, of the at least two capturing lines (E₁ to Eₘ) are arranged in the same way along each line, wherein the position and orientation of each further capturing line (E₁ to Eₘ) is producible by a displacement of a first capturing line (E₁ to Eₘ) in the movement direction, and
(f) **in that** the X-rays are detected at the at least two capturing lines (E₁ to Eₘ) with a time offset such that radiation that has passed through the individual item (3) substantially on the same path is detected at each capturing line (E₁ to Eₘ), and in that the partial image data of each partial image which are detected at each capturing line (E₁ to Eₘ) are added together.

2. Method according to Claim 1, **characterized in that** the partial resulting images of all scanning positions are combined to form a resulting image.

3. Method according to Claim 1 or 2, **characterized in that** the capturing positions of a partial image along the relevant line are equidistant and selected with respect to the distance such that a structure of the individual item (3) that is to be captured extends with a specified minimum extent along the at least one capturing line (E₁ to Eₘ) over at least two capturing positions.

4. Method according to one of the preceding claims, **characterized in that** the scanning positions in the movement direction of the individual item are equidistant and selected with respect to the distance such that a structure of the individual item (3) that is to be captured extends with a specified minimum extent in the movement direction over at least two scanning positions.

5. Method according to one of the preceding claims, **characterized in that** the values of the relevant partial image at selected or at all capturing positions of a further one of the at least two partial images are calculated from the detected partial image data of each of the at least two partial images in each case by means of a specified transformation rule, and **in that** a partial resulting image is calculated from the detected and calculated partial image data of two or more of the partial images, preferably by way of a weighted addition of the partial image data at in each case identical positions taking into consideration the sign of the weighting factors.

6. Method according to one of the preceding claims, **characterized in that** each partial resulting image or the complete resulting image or specified portions of the resulting image are checked for the presence of unwanted characteristics that are to be detected, preferably using a pattern recognition method.

7. Apparatus for capturing the structure of moving individual items, in particular for capturing unwanted particles in liquid or pasty products,
(a) having a transport device (5) for moving an individual item (3) to be captured along a specified direction,
(b) having an X-ray source (9) for producing broadband X-ray radiation which is directed such that the individual item (3) that is to be captured is irradiated as it moves,
(c) having an X-ray detector device (11), which detects the radiation that has passed through the individual item (3) along at least one specified positionally fixed capturing line (E₁ to Eₘ) transversely to the movement direction, wherein one scanning position corresponds to each capturing line (E₁ to Eₘ), and wherein the X-ray detector device (11) is configured such
(i)that, at capturing positions provided along the at least one capturing line (E₁ to Eₘ), at least one first partial image for a first spectral portion of the X-rays is detected and a second partial image for a second spectral portion or the entire spectrum of the X-rays is detected and in each case converted to partial image data,
(ii) wherein each of the at least two partial images is uniquely assigned in each case a plurality of discrete capturing positions arranged along the at least one capturing line (E₁ to Eₘ), which are arranged in a specified sequence along the capturing line (E₁ to Eₘ), and wherein in each case one value for the radiation energy in the relevant spectral portion is ascertained at each capturing position, and
(d) having an image data processing unit (17), which is fed the partial image data produced by the X-ray detector device (11) and which computationally links the partial image data of the at least one first and second image to form at least one partial resulting image for improving the recognizability with respect to specified characteristics of the structure of the individual item,
**characterized**
(e) **in that** the X-ray detector device (11) comprises at least two capturing lines (E₁ to Eₘ) or two groups of capturing lines (E₁ to Eₘ) which have a specified distance in the movement direction, in that the capturing positions, that are assigned to a partial image, of the at least two capturing lines (E₁ to Eₘ) or of the at least two groups of capturing lines (E₁ to Eₘ) are arranged in the same way along each line, wherein the position and orientation of each further capturing line (E₁ to Eₘ) or group of capturing lines (E₁ to Eₘ) is producible by displacing a first capturing line (E₁ to Eₘ) or a first group of capturing lines (E₁ to Eₘ) in the movement direction, and
(f) **in that** the X-ray detector device (11) detects the X-rays at the at least two capturing lines (E₁ to Eₘ) or groups of capturing lines (E₁ to Eₘ) during in each case one capturing interval with a time offset such that radiation that has passed through the individual item (3) substantially on the same path is detected during each capturing interval.

8. Apparatus according to Claim 7, **characterized in that** the image data processing unit (17) combines the partial resulting image of all scanning positions to form at least one resulting image.

9. Apparatus according to Claim 7 or 8, **characterized in that** the capturing positions of a partial image along the relevant capturing line (E₁ to Eₘ) are equidistant and selected with respect to the distance such that a structure of the individual item that is to be captured extends with a specified minimum extent along the at least one line over at least two capturing positions.

10. Apparatus according to one of Claims 7 to 9, **characterized in that** the scanning positions of an image in the movement direction of the individual item are equidistant and selected with respect to the distance such that a structure of the individual item that is to be captured extends with a specified minimum extent in the movement direction in at least two scanning positions.

11. Apparatus according to one of Claims 7 to 10, **characterized in that** the image data processing unit (17) calculates the values of the relevant partial image at selected or at all capturing positions of a further one of the at least two partial images from the detected partial image data of each of the at least two partial images in each case by means of a specified transformation rule, and **in that** the image data processing unit (17) calculates a partial resulting image from the detected and calculated partial image data of two or more of the partial images, preferably by way of a weighted addition of the partial image data at in each case identical positions taking into consideration the sign of the weighting factors.

12. Apparatus according to one of Claims 7 to 11, **characterized in that** the image data processing unit (17) checks each partial resulting image or the complete resulting image or specified portions of the resulting image for the presence of unwanted characteristics that are to be detected, preferably using a pattern recognition method.

13. Apparatus according to one of Claims 7 to 12, **characterized in that** the X-ray detector device (11) has for each capturing line (E₁ to Eₘ) a series of radiation sensors (15) that are arranged along the capturing line (E₁ to Eₘ), wherein each capturing position is formed by one or more radiation sensors.

14. Apparatus according to Claim 13, **characterized in that** the radiation sensors (15) of the capturing positions of a partial image have a spectral sensitivity that corresponds to the spectral portion of the X-rays produced by the X-ray source (9).

15. Apparatus according to Claim 13, **characterized in that** the X-ray detector device (11) comprises a spatial filter (21) for filtering the X-rays that are to be captured, which is arranged between the individual item (3) and the radiation sensors (15), wherein the spatial filter (21) has a strip structure,
(a) wherein each partial image that is to be captured is assigned a set of strips of constant width which have a filter characteristic assigned to the partial image for producing the relevant spectral portion of the X-rays,
(b) wherein the width of the strips corresponds to the extent and position of the assigned capturing positions along the relevant capturing line (E₁ to Eₘ) .

16. Apparatus according to Claim 15, if also referring back to Claim 13, **characterized in that** the X-ray detector device (11) comprises at least two capturing lines (E₁ to Eₘ), and **in that** the strips of the spatial filter (21) are parallel to the movement direction of the individual item (3).

17. Apparatus according to one of Claims 13 to 16, **characterized in that** the spatial filter (21) is configured such that it is integrated with the radiation sensors (15) of the X-ray detector device (11) .

## Revendications

1. Procédé de détection de la structure de marchandises de détail qui sont déplacées, notamment de détection de particules perturbatrices dans des produits liquides ou pâteux,
(a) dans lequel une marchandise de détail (3) à détecter, déplacée le long d'une direction prédéfinie est traversée par un rayonnement X à large bande, et
(b) dans lequel le rayonnement ayant traversé la marchandise de détail (3) est détecté le long d'au moins une ligne de détection fixe prédéfinie (E₁ à Eₘ) transversalement à la direction de déplacement, dans lequel une position de balayage de la marchandise de détail (3) dans la direction de déplacement correspond à chaque ligne de détection (E₁ à Eₘ),
(c) dans lequel le long de l'au moins une ligne de détection (E₁ à Eₘ) pour chaque position de balayage de la marchandise de détail (3) respectivement simultanément au moins une première image partielle pour une première section spectrale du rayonnement X est détectée et une deuxième image partielle pour une deuxième section spectrale ou le spectre complet du rayonnement X est détectée et respectivement convertie en données d'images partielles,
(i) dans lequel respectivement une pluralité de positions de détection discrètes agencées le long de la ligne de détection (E₁ à Eₘ) est associée sans ambiguïté à chacune des au moins deux images partielles, dans lequel les positions de détection sont agencées dans un ordre prédéfini le long de ligne de détection (E₁ à Eₘ),
(ii) dans lequel respectivement une valeur pour l'énergie de rayonnement dans la section spectrale concernée est déterminée au niveau des positions de détection associées à une image partielle pour la génération des données d'images partielles concernées, et
(d) dans lequel les données d'images partielles de l'au moins une première et deuxième image partielle pour l'amélioration de la détectabilité par rapport à des caractéristiques prédéfinies de la structure de la marchandise de détail (3) sont reliées arithmétiquement en au moins une image résultante partielle,
**caractérisé en ce**
(e) **qu'**au moins deux lignes de détection (E₁ à Eₘ) sont prévues, qui présentent une distance prédéfinie dans la direction de déplacement, que les positions de détection associées à une image partielle des au moins deux lignes de détection (E₁ à Eₘ) sont agencées de la même manière le long de chaque ligne, dans lequel la position et l'orientation de chaque autre ligne de détection (E₁ à Eₘ) peut être générée par un décalage d'une première ligne de détection (E₁ à Eₘ) dans la direction de déplacement, et
(f) **que** le rayonnement X est détecté de manière décalée dans le temps au niveau des au moins deux lignes de détection (E₁ à Eₘ) de sorte qu'au niveau de chaque ligne de détection (E₁ à Eₘ), un rayonnement, qui a pénétré dans la marchandise de détail (3) sensiblement sur la même trajectoire, est détecté et que les données d'images partielles de chaque image partielle détectées au niveau de chaque ligne de détection (E₁ à Eₘ) sont additionnées.

2. Procédé selon la revendication 1, **caractérisé en ce que** les images résultantes partielles de toutes les positions de balayage sont combinées en une image résultante.

3. Procédé selon la revendication 1 ou 2, **caractérisé en ce que** les positions de détection d'une image partielle sont sélectionnées équidistantes le long de la ligne concernée et par rapport à la distance de sorte qu'une structure à détecter de la marchandise de détail (3) s'étend avec une extension minimum prédéfinie le long de l'au moins une ligne de détection (E₁ à Eₘ) sur au moins deux positions de détection.

4. Procédé selon l'une quelconque des revendications précédentes, **caractérisé en ce que** les positions de balayage sont sélectionnées équidistantes dans la direction de déplacement de la marchandise de détail et par rapport à la distance de sorte qu'une structure à détecter de la marchandise de détail (3) s'étend avec une extension minimum prédéfinie dans la direction de déplacement sur au moins deux positions de balayage.

5. Procédé selon l'une quelconque des revendications précédentes, **caractérisé en ce que** les valeurs de l'image partielle concernée sont calculées au niveau de positions de détection sélectionnées ou au niveau de toutes les positions de détection d'une autre des au moins deux images partielles à partir des données d'images partielles détectées de chacune des au moins deux images partielles respectivement au moyen d'une prescription de transformation prédéfinie, et qu'une image résultante partielle est calculée à partir des données d'images partielles détectées et calculées de deux ou plus des images partielles, de préférence par une addition pondérée, tenant compte du signe des facteurs de pondération, des données d'images partielles au niveau de positions respectivement identiques.

6. Procédé selon l'une quelconque des revendications précédentes, **caractérisé en ce que** chaque image résultante partielle ou l'image résultante complète ou des sections prédéfinies de l'image résultante est/sont contrôlée(s) quant à la présence de caractéristiques perturbatrices à détecter, de préférence en utilisant un procédé de reconnaissance de formes.

7. Dispositif de détection de la structure de marchandises de détail qui sont déplacées, notamment de détection de particules perturbatrices dans des produits liquides ou pâteux,
(a) avec un dispositif de transport (5) pour le déplacement d'une marchandise de détail (3) à détecter le long d'une direction prédéfinie,
(b) avec une source de rayonnement X (9) pour la génération d'un rayonnement X à large bande, lequel est dirigé de sorte que la marchandise de détail (3) à détecter est traversée pendant son déplacement,
(c) avec un dispositif de détection de rayonnement X (11), lequel détecte le rayonnement ayant traversé la marchandise de détail (3) le long d'au moins une ligne de détection fixe prédéfinie (E₁ à Eₘ) transversalement à la direction de déplacement, dans lequel une position de balayage correspond à chaque ligne de détection (E₁ à Eₘ) et dans lequel le dispositif de détection de rayonnement X (11) est réalisé de sorte
(i) qu'au niveau de positions de détection prévues le long de l'au moins une ligne de détection (E₁ à Eₘ), au moins une première image partielle pour une première section spectrale du rayonnement X est détectée et une deuxième image partielle pour une deuxième section spectrale ou le spectre complet du rayonnement X est détectée et respectivement convertie en données d'images partielles,
(ii) dans lequel respectivement une pluralité de positions de détection discrètes agencées le long de l'au moins une ligne de détection (E₁ à Eₘ) est associée sans ambiguïté à chacune des au moins deux images partielles, lesquelles positions sont agencées dans un ordre prédéfini le long de ligne de détection (E₁ à Eₘ) et dans lequel respectivement une valeur pour l'énergie de rayonnement dans la section spectrale concernée est déterminée au niveau de chaque position de détection, et
(d) avec une unité de traitement de données d'images (17), à laquelle les données d'images partielles générées par le dispositif de détection de rayonnement X(11) sont amenées et laquelle relie arithmétiquement les données d'images partielles de l'au moins une première et deuxième image pour l'amélioration de la détectabilité par rapport à des caractéristiques prédéfinies de la structure de la marchandise de détail en au moins une image résultante partielle,
**caractérisé en ce**
(e) **que** le dispositif de détection de rayonnement X (11) comprend au moins deux lignes de détection (E₁ à Eₘ) ou deux groupes de lignes de détection (E₁ à Eₘ), qui présentent une distance prédéfinie dans la direction de déplacement, que les positions de détection associées à une image partielle des au moins deux lignes de détection (E₁ à Eₘ) ou des au moins deux groupes de lignes de détection (E₁ à Eₘ) sont agencées de la même manière le long de chaque ligne, dans lequel la position et l'orientation de chaque autre ligne de détection (E₁ à Eₘ) ou groupe de lignes de détection (E₁ à Eₘ) peut être générée par un décalage d'une première ligne de détection (E₁ à Eₘ) ou d'un premier groupe de lignes de détection (E₁ à Eₘ) dans la direction de déplacement, et
(f) **que** le dispositif de détection de rayonnement X (11) détecte le rayonnement X manière décalée dans le temps au niveau des au moins deux lignes de détection (E₁ à Eₘ) ou groupes de lignes de détection (E₁ à Eₘ) pendant respectivement un intervalle de détection de sorte qu'un rayonnement, qui a pénétré dans la marchandise de détail (3) sensiblement sur la même trajectoire, est détecté pendant chaque intervalle de détection.

8. Dispositif selon la revendication 7, **caractérisé en ce que** l'unité de traitement de données d'images (17) combine les images résultantes partielles de toutes les positions de balayage en au moins une image résultante.

9. Dispositif selon la revendication 7 ou 8, **caractérisé en ce que** les positions de détection d'une image partielle sont sélectionnées équidistantes le long de la ligne de détection (E₁ à Eₘ) concernée et par rapport à la distance de sorte qu'une structure à détecter de la marchandise de détail s'étend avec une extension minimum prédéfinie le long de l'au moins une ligne sur au moins deux positions de détection.

10. Dispositif selon l'une quelconque des revendications 7 à 9, **caractérisé en ce que** les positions de balayage d'une image sont sélectionnées équidistantes dans la direction de déplacement de la marchandise de détail et par rapport à la distance de sorte qu'une structure à détecter de la marchandise de détail s'étend avec une extension minimum prédéfinie dans la direction de déplacement dans au moins deux positions de balayage.

11. Dispositif selon l'une quelconque des revendications 7 à 10, **caractérisé en ce que** l'unité de traitement de données d'images (17) calcule les valeurs de l'image partielle concernée au niveau de positions de détection sélectionnées ou au niveau de toutes les positions de détection d'une autre des au moins deux images partielles à partir des données d'images partielles détectées de chacune des au moins deux images partielles respectivement au moyen d'une prescription de transformation prédéfinie, et que l'unité de traitement de données d'images (17) calcule une image résultante partielle à partir des données d'images partielles détectées et calculées de deux ou plus des images partielles, de préférence par une addition pondérée, tenant compte du signe des facteurs de pondération, des données d'images partielles au niveau de positions respectivement identiques.

12. Dispositif selon l'une quelconque des revendications 7 à 11, **caractérisé en ce que** l'unité de traitement de données d'images (17) contrôle chaque image résultante partielle ou l'image résultante complète ou des sections prédéfinies de l'image résultante quant à la présence de caractéristiques perturbatrices à détecter, de préférence en utilisant un procédé de reconnaissance de formes.

13. Dispositif selon l'une quelconque des revendications 7 à 12, **caractérisé en ce que** le dispositif de détection de rayonnement X(11) présente pour chaque ligne de détection (E₁ à Eₘ) une série de capteurs de rayonnement (15) agencée le long de la ligne de détection (E₁ à Eₘ), dans lequel chaque position de détection est formée par un ou plusieurs capteurs de rayonnement.

14. Dispositif selon la revendication 13, **caractérisé en ce que** les capteurs de rayonnement (15) des positions de détection d'une image partielle présentent une sensibilité spectrale, qui correspond à la section spectrale du rayonnement X généré par la source de rayonnement X (9).

15. Dispositif selon la revendication 13, **caractérisé en ce que** le dispositif de détection de rayonnement X (11) comprend un filtre spatial (21) pour le filtrage du rayonnement X à détecter, lequel est agencé entre la marchandise de détail (3) et les capteurs de rayonnement (15), dans lequel le filtre spatial (21) présente une structure de bande,
(a) dans lequel un jeu de bandes de largeur constante est associé à chaque image partielle à détecter, lesquelles bandes présentent une caractéristique de filtre associée à l'image partielle pour la génération de la section spectrale concernée du rayonnement X,
(b) dans lequel la largeur des bandes correspond à l'extension et à la position des positions de détection associées le long de la ligne de détection (E₁ à Eₘ) concernée.

16. Dispositif selon la revendication 15, dans la mesure où celle-ci se réfère à la revendication 13, **caractérisé en ce que** le dispositif de détection de rayonnement X (11) comprend au moins deux lignes de détection (E₁ à Eₘ) et que les bandes du filtre spatial (21) sont orientées parallèlement à la direction de déplacement de la marchandise de détail (3).

17. Dispositif selon l'une quelconque des revendications 13 à 16, **caractérisé en ce que** le filtre spatial (21) est réalisé de manière intégrée avec les capteurs de rayonnement (15) du dispositif de détection de rayonnement X (11).
